# FASCICULE DE BREVET EUROPEEN

(11) **EP 0 309 348 B1**
(45) Date de publication et mention de la délivrance du brevet: **21.04.1993**
(21) Numéro de dépôt: 88402383.9
(22) Date de dépôt: 21.09.1988
(51) Int. Cl.: G06F 7/50, G06F 7/52

(54) **Dispositif d'addition et de multiplication binaire**
Binäre Additions- und Multiplikationsvorrichtung
Binary addition and multiplication device

(30) Priorité: 23.09.1987 FR 8713146
(43) Date de publication de la demande: 29.03.1989
(73) Titulaire: FRANCE TELECOM, 75015 Paris (FR)
(72) Inventeur: Hmida, Hedi, F-75015 Paris (FR); Duhamel, Pierre, F-92130 Issy-les-Moulineaux (FR)
(74) Mandataire: Plaçais, Jean-Yves

(56) Documents cités:
- EP-A- 0 096 333
- EP-A- 0 262 032
- US-A- 3 767 906
- PROCEEDINGS OF THE IEEE INTERNATIONAL CONFERENCE ON COMPUTER DESIGN: VLSI IN COMPUTERS, "Sponsored by IEEE Computer Society and IEEE Circuits and Systems Society", ICCD'85, Port Chester, New York, 7-10 octobre 1985, pages 359-362, IEEE, New York, US; S. STEINLECHNER et al.: "Carry-save adders and their application for a multiplication with factored multiplicands"

## Description

L'invention concerne le calcul de chiffres binaires ou bits. Elle trouve une application dans la réalisation de systèmes électroniques binaires tels que les additionneurs, les multiplieurs, les diviseurs, les accumulateurs, ...
Dans le document "Proceedings of the IEEE international conference on computer design : VLSI in computers", New York, 7-10 octobre 1985, pages 359-362, S. STEINLECHNER, dans la Demande de Brevet français 87 03758, déposée le 18 Mars 1987, et dans la Publication de la Demande de Brevet européen correspondante EP-A-283393, il est décrit un dispositif de calcul binaire de type comprenant au moins une cellule possédant :
- une entrée de premiers chiffres binaires ou bits (Aᵢ),
- une entrée de seconds bits (Bᵢ),
- une entrée de report amont (Rᵢ₋₁S),
- des premiers moyens pour engendrer un signal de OU EXCLUSIF des deux bits d'entrée (Aᵢ⊕Bᵢ) et son complément (A̅ᵢ̅⊕̅B̅ᵢ̅),
- des seconds moyens pour produire un signal de résultat par une fonction OU EXCLUSIF du report amont (Rᵢ₋₁S) avec le signal de OU EXCLUSIF des deux bits d'entrée (Aᵢ⊕Bᵢ),
- des troisièmes moyens pour produire un signal de report aval (RᵢS) par une fonction de transmission comprenant deux portes de transmission commandées par le signal de OU EXCLUSIF des deux bits d'entrée (Aᵢ⊕Bᵢ) et son complément (A̅ᵢ̅⊕̅B̅ᵢ̅), l'une des portes permettant le passage du signal du report amont (Rᵢ₋₁S) et l'autre des portes permettant le passage de l'un des deux signaux des bits d'entrée (Aᵢ, Bᵢ).

La publication de Demande de Brevet Européenne EP-A-262032 constitue un état de la technique selon l'Article 54(3) et (4) CBE. Il décrit un dispositif de calcul binaire du type comprenant au moins une cellule de base pour additionner un premier opérande A, de valeur binaire quelconque, à un second opérande B de valeur fixe et connue, ledit dispositif comprenant n cellules de base, chaque cellule comprend des moyens d'entrée d'un premier bit, d'un second bit d'entrée et du report amont, les cellules sont agencées de façon à ce que la sortie de report aval de la cellule de base de rang j est reliée à l'entrée de report amont de la cellule de base de rang j+1. La structure de chaque cellule d'addition est déterminée par la valeur spécifique du bit B₁ de l'opérande fixe B et elle comprend un module pour produire un signal de résultat, ledit signal de résultat étant représentatif d'une fonction OU-EXCLUSIF dudit premier bit d'entrée et de son inverse avec le report amont.
Ce dispositif de calcul binaire trouve son application dans un multiplieur.

Dans l'ensemble des modes de réalisation décrits dans les documents antérieurs mentionnés ci-avant, le signal de report amont (Rᵢ₋₁S) attaquent le drain des transistors équipant les portes de transmission commandées par le signal de OU EXCLUSIF des deux bits d'entrée (Aᵢ⊕Bᵢ) et son complément (A̅ᵢ̅⊕̅B̅ᵢ̅). Il en résulte une perte de temps au niveau du calcul du report aval (RᵢS) et par conséquent au niveau de la propagation du report dans les dispositifs à plusieurs cellules en parallèle agencées en modules additionneurs et/ou soustracteurs à report propagé.

Le Demandeur a maintenant observé qu'en permutant le rôle de l'entrée de second bit (Bᵢ) avec l'entrée de report amont (Rᵢ₋₁S), et qu'en utilisant pour le calcul de la retenue aval (RᵢS) les variables intermédiaires ainsi obtenues par cette permutation, le délai de propagation du report dans de telles cellules en paralléle est considérablement diminué. En effet, le signal de report amont (Rᵢ₋₁S) via le signal de OU EXCLUSIF (Aᵢ⊕Rᵢ₋₁S) attaque maintenant la grille des transistors équipant les portes de transmission commandées par ledit signal de OU EXCLUSIF (Aᵢ⊕Rᵢ₋₁S) et son complément (A̅ᵢ̅⊕̅R̅ᵢ̅₋̅₁̅S̅).

D'une manière plus précise, l'invention porte sur un dispositif de calcul binaire du type comprenant au moins une cellule possédant :
- une entrée de premiers chiffres binaires ou bits (Aᵢ),
- une entrée de seconds bits (Bᵢ),
- une entrée de report amont (Rᵢ₋₁S).

Selon une caractéristique très importante de l'invention, chaque cellule comprend :
- des premiers moyens pour engendrer un signal de OU EXCLUSIF de l'un des deux bits d'entrée avec le report amont (Aᵢ⊕Rᵢ₋₁S) et son complément (A̅ᵢ̅⊕̅R̅ᵢ̅₋̅₁̅S̅), ledit complément (A̅ᵢ̅⊕̅R̅ᵢ̅₋̅₁̅S̅) étant produit par inversion du signal (Aᵢ⊕Rᵢ₋₁S),
- des seconds moyens pour produire un signal de résultat par une fonction OU EXCLUSIF de l'autre des deux bits d'entrée (Bᵢ) avec le signal de OU EXCLUSIF de l'un des deux bits d'entrée avec le report amont (Aᵢ⊕Rᵢ₋₁S),
- des troisièmes moyens pour produire un signal de report aval (RᵢS) par une fonction de transmission comprenant deux portes de transmission commandées par le signal de OU EXCLUSIF de l'un des deux bits d'entrée avec le report amont (Aᵢ⊕Rᵢ₋₁S) et son complément (A̅ᵢ̅⊕̅R̅ᵢ̅₋̅₁̅S̅), l'une des portes permettant le passage de l'un des deux signaux des bits d'entrée (Aᵢ) et l'autre des portes permettant le passage de l'autre des deux signaux des bits d'entrée (Bᵢ).

Des modes de réalisation préférés de l'invention sont définis dans les revendications dépendants 2 à 4.

L'objet de l'invention est également défini par la revendication independante 5 qui porte sur un dispositif de calcul binaire comprenant plusieurs cellules dans lesquelles le report aval (RᵢS) de la cellule de rang i (0<i<n-2) est relié à l'entrée de report amont (RᵢS) de la cellule de rang i+1. Avantageusement, chaque cellule est câblée selon la valeur du bit (Bᵢ) de l'opérande B fixe.

Des modes de réalisation préférés de l'invention sont aussi définis dans les revendications dépendantes 6 à 10.

Plus particulièrement, le premier module de chaque cellule associé à un bit (Bᵢ) de valeur logique "0" de l'opérande fixe B comprend une première paire de transistors de polarités opposées, la grille de chacun des transistors étant reliée à l'entrée de report amont (Rᵢ₋₁S), une tension électrique positive V étant appliquée au drain de l'un des transistors, la masse étant appliquée à la source de l'autre transistor, la source de l'un des transistors et le drain de l'autre transistor étant reliés à un noeud, le premier module comprend encore une seconde paire de transistors de polarités opposées, le drain de l'un des transistors étant relié à l'entrée de report amont (Rᵢ₋₁S) et la source de l'autre transistor étant reliée au noeud, la grille de chacun des transistors étant reliée à l'entrée du premier bit (Aᵢ) de l'opérande A, la source de l'un des transistors et le drain de l'autre transistor étant reliés à un autre noeud et le premier module comprend enfin une troisième paire de transistors de polarités opposées, la source de chacun des transistors étant reliée à l'autre noeud, le drain de chacun des deux transistors étant relié à l'entrée de premier bit (Aᵢ) de l'opérande A, la grille de l'un des transistors étant reliée à l'entrée de report amont (Rᵢ₋₁S) et la grille de l'autre transistor étant reliée à l'un des noeuds, le signal OU EXCLUSIF des bits de l'opérande A avec le report amont (Aᵢ⊕Rᵢ₋₁S) étant obtenu à l'autre noeud.

D'autre part, le second module de chaque cellule associée à un bit (Bᵢ) de valeur logique "0" de l'opérande B fixe comprend une paire de transistors de polarités opposées, la grille de l'un des transistors étant reliée au signal de report amont (Rᵢ₋₁S) et la grille de l'autre transistor étant reliée au complément du signal de report amont (R̅ᵢ̅₋̅₁̅S̅), le drain de chacun des transistors étant relié au bit (Aᵢ) de l'opérande A, la source de chacun des transistors étant reliée à un noeud, le second module comprend encore un transistor de canal N dont la source est à la masse, dont la grille est commandée par le complément du signal de report amont (R̅ᵢ̅₋̅₁̅S̅) et dont le drain est relié au noeud, le signal de report aval étant obtenu au noeud reliant la source de chacun des transistors de la paire avec le drain du transistor isolé de canal N.

Par ailleurs, le premier module de chaque cellule associé à un bit (Bᵢ) de valeur logique "1" de l'opérande fixe B comprend une première paire de transistors de polarités opposées, la grille de chacun des transistors étant reliée à l'entrée de report amont (Rᵢ₋₁S), une tension électrique positive V étant appliquée au drain de l'un des transistors, la masse étant appliquée à la source de l'autre transistor, la source de l'un des transistors et le drain de l'autre transistor étant reliés à un noeud, le premier module comprend encore une seconde paire de transistors de polarités opposées, le drain de l'un des transistors étant relié au noeud et la source de l'autre transistor étant reliée à l'entrée de report amont (Rᵢ₋₁S), la grille de chacun des transistors étant reliée à l'entrée de premiers bits (Aᵢ) de l'opérande A,la source de l'un des transistors et le drain de l'autre transistor étant reliés à un autre noeud et le premier module comprend enfin une troisième paire de transistors de polarités opposées, la source de chacun des transistors étant reliée à l'autre noeud, le drain de chacun des deux transistors étant relié à l'entrée de premiers bits (Aᵢ) de l'opérande A, la grille de l'un des transistors étant reliée à l'un des noeuds et la grille de l'autre transistor étant reliée à l'entrée de report amont (Rᵢ₋₁S), le signal de OU EXCLUSIF des bits de l'opérande A avec le report amont (Aᵢ⊕Rᵢ₋₁S) étant obtenu à l'autre noeud.

En plus, le second module de chaque cellule associé à un bit (Bᵢ) de valeur logique "1" de l'opérande B fixe comprend une paire de transistors de polarités opposées, la grille de l'un des transistors étant reliée au signal de report amont (Rᵢ₋₁S) et la grille de l'autre transistor étant reliée au complément du signal de report amont (R̅ᵢ̅₋̅₁̅S̅), le drain de chacun des transistors étant relié au bit (Aᵢ) de l'opérande A, la source de chacun des transistors étant reliée à un noeud, le second module comprend encore un transistor de canal P dont la source est reliée à une tension électrique positive V, dont la grille est commandée par le complément du signal de report amont (R̅ᵢ̅₋̅₁̅S̅) et dont le drain est relié au noeud, le signal de report aval (RᵢS) étant obtenu au noeud reliant la source de chacun des transistors de la paire avec le drain du transistor isolé de canal P.

L'invention peut également s'appliquer à un multiplieur binaire parallèle-série pour la multiplication d'un opérande fixe B de n bits Bₙ₋₁, Bₙ₋₂, ... B₀ par un opérande D de n bits Dₙ₋₁, Dₙ₋₂, ..., D₀ de valeur quelconque, ledit multiplieur comprenant un registre d'accumulation et de décalage pour mémoriser un résultat partiel de la multiplication, ledit registre comportant une entrée et une sortie.

Un multiplieur particulier de ce genre a été décrit dans la publication de la Demande de Brevet Europeene EP-A-262032
Selon une autre caractéristique de la présente invention, le multiplieur comprend, en outre :
- un dispositif de calcul binaire décrit ci-dessus et comportant une entrée reliée à la sortie du registre et à une sortie, la cellule dudit dispositif de calcul binaire comprenant un premier module pour délivrer un signal de OU EXCLUSIF (Dᵢ⊕Rᵢ₋₁S) et un second module pour produire un signal de report aval (RᵢS), et
- un multiplexeur ayant deux entrées reliées respectivement à la sortie du dispositif de calcul binaire et à la sortie du registre, et une sortie reliée à l'entrée du registre, ledit multiplexeur comportant également une entrée de commande sur laquelle est appliquée l'opérande non fixe D sous forme série.

Selon une variante de réalisation, pour permettre la multiplication de deux opérandes de signe contraire, le multiplieur comprend un deuxième multiplexeur disposé entre la sortie du registre d'accumulation-décalage et l'entrée du dispositif de calcul binaire, ledit second multiplexeur comprenant deux entrées, reliées respectivement à la sortie du registre d'accumulation et de décalage et à la sortie d'un inverseur dont l'entrée est reliée à la sortie du registre, ledit deuxième multiplexeur étant commandé par le bit de poids le plus fort Dₙ₋₁ de l'opérande D.

D'autres caractéristiques et avantages de l'invention apparaîtront à l'examen de la description détaillée ci-après, et des dessins annexés, sur lesquels :
- la figure 1 représente schématiquement les éléments constitutifs et essentiels d'un additionneur complet à trois entrées (Aᵢ, Bᵢ et Rᵢ₋₁S) sur un bit comportant 16 transistors, conformément à l'invention;
- la figure 2 représente schématiquement les éléments constitutifs et essentiels d'un additionneur complet à trois entrées (Aᵢ, Bᵢ et Rᵢ₋₁S) sur un bit comportant 15 transistors, conformément à l'invention;
- la figure 3 représente schématiquement les deux modules d'une cellule d'addition selon l'invention pour additionner un bit (Aᵢ) de valeur binaire quelconque à un bit de valeur logique "0";
- la figure 4 représente schématiquement les deux modules d'une cellule d'addition selon l'invention pour additionner un bit (Aᵢ) de valeur binaire quelconque à un bit de valeur logique "1";
- la figure 5 représente schématiquement un circuit regroupant les deux cellules décrites en référence aux figures 3 et 4 et dont les entrées sont programmables en fonction de l'opérande fixe B selon l'invention;
- la figure 6 représente schématiquement un additionneur selon l'invention, dans lequel les cellules d'addition sont câblées suivant la valeur des bits de l'opérande fixe;
- la figure 7 illustre schématiquement la structure d'un multiplieur selon l'invention, ledit multiplieur comprenant un additionneur conforme à la figure 6; et
- la figure 8 illustre une variante de réalisation du multiplieur de l'invention, pour le traitement de deux opérandes de signe quelconque.

Les dessins annexés comportent à de nombreux titres des informations de caractère certain. En conséquence, ils pourront non seulement permettre de comprendre la description détaillée ci-après, mais aussi contribuer à la définition de l'invention le cas échéant.

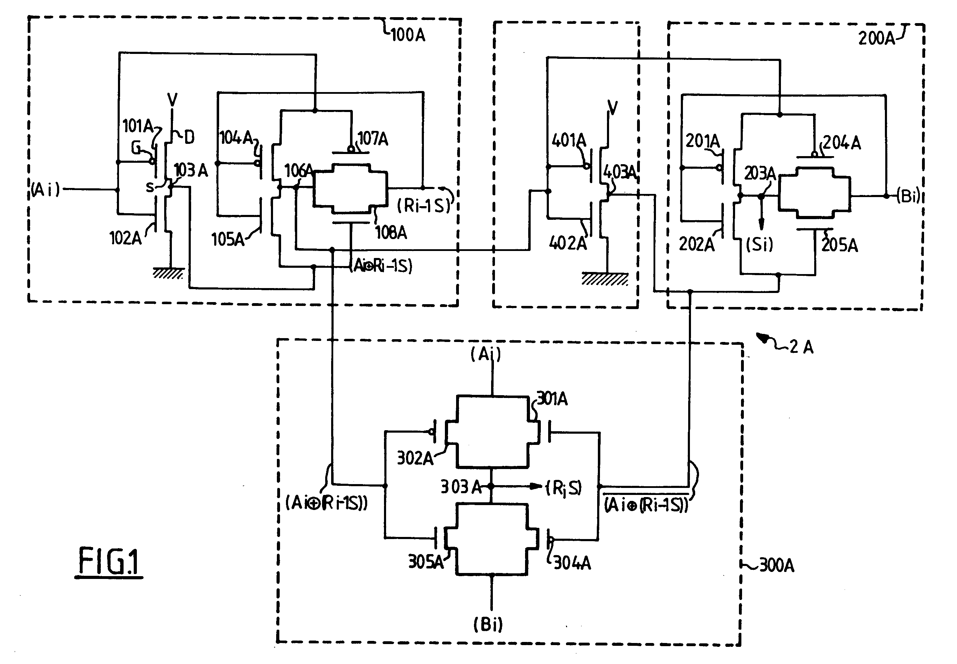

Sur la figure 1, la référence 2A désigne un additionneur complet à trois entrées sur un bit comportant 16 transistors, conformément à l'invention.

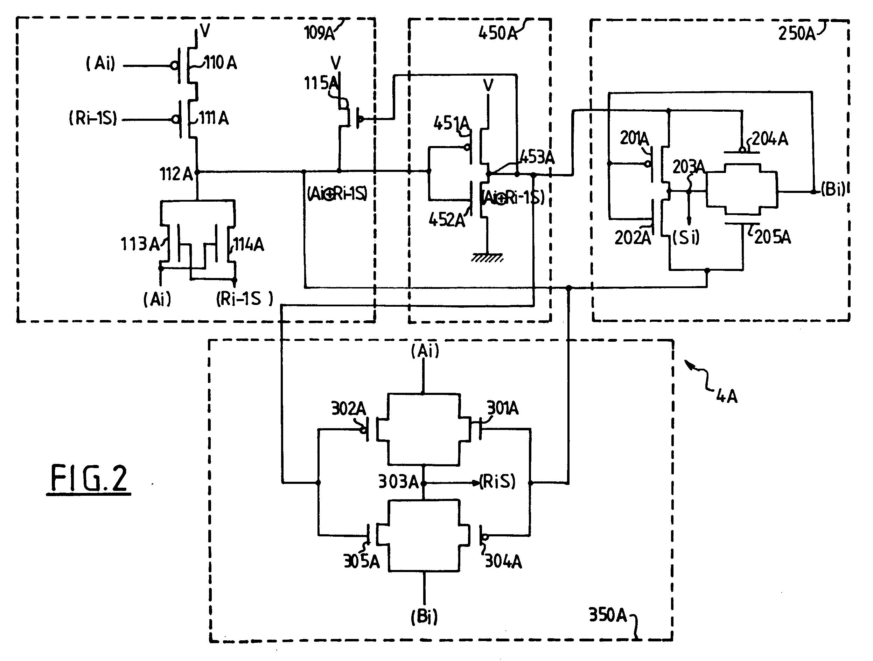

La cellule d'addition 2A représentée sur la figure 1 est pratiquement identique à la cellule d'addition 2 représentée sur la figure 2 de la Demande de Brevet français No 87 03758 et de la Demande de Brevet européen correspondante. Elle n'en diffère que par la permutation de l'entrée de seconds bits (Bᵢ) avec l'entrée de report amont (Rᵢ₋₁S) et par l'ajout d'un A sur les références des éléments essentiels et constitutifs de l'additionneur 2A selon l'invention.

L'additionneur 2A comprend une entrée de premiers bits (Aᵢ), une entrée de seconds bits (Bᵢ) et une entrée de report amont (Rᵢ₋₁S). L'additionneur 2A produit un signal de résultat (Sᵢ). Le résultat est la somme des deux bits (Aᵢ, Bᵢ) du report amont (Rᵢ₋₁S). Il est obtenu par le calcul de la somme modulo, appelée encore somme OU EXCLUSIVE, du premier bit (Aᵢ), du second bit (Bᵢ) et du report amont (Rᵢ₋₁S).

L'additionneur 2 produit un signal de report aval (RᵢS) associé au résultat du calcul de la somme (Sᵢ) des trois bits d'entrée (Aᵢ, Bᵢ et Rᵢ₋₁S). Le signal de report aval (RᵢS) est obtenu par le calcul de la somme du produit des deux bits, du produit de l'un (Aᵢ) des bits par le report amont (Rᵢ₋₁S) et du produit de l'autre (Bᵢ) des deux bits par le report amont (Rᵢ₋₁S).

Pour obtenir ces deux signaux, l'additionneur 2 comprend tout d'abord des premiers moyens 100A pour engendrer un signal de OU EXCLUSIF de l'un des deux bits d'entrée avec le report amont (Aᵢ⊕Rᵢ₋₁S). Ces premiers moyens 100A comprennent une paire de transistors 101A et 102A complémentaires de technologie MOS. Le transistor 101A est à canal P et le transistor 102A est à canal N. La grille G de chacun des transistors 101A et 102A est reliée à l'entrée de premiers bits (Aᵢ). Une tension électrique V est appliquée au drain D du transistor 101A. V a une valeur de 5 Volts par exemple, dans le cas de transistors en technologie MOS. La masse est appliquée à la source S du transistor 102A. La source du transistor 101A et le drain du transistor 102A sont reliés à un noeud 103A. Les premiers moyens 100A comprennent encore une seconde paire de transistors 104A et 105A complémentaires de technologie MOS. Le transistor 104A est à canal P et le transistor 105A est à canal N. Le drain du transistor 104 est relié à l'entrée de premiers bits (Aᵢ) et la source du transistor 105A est reliée au noeud 103A. La grille de chacun des transistors 104A et 105A est reliée à l'entrée de report amont (Rᵢ₋₁S). La source du transistor 104A et le drain du transistor 105A sont reliés à un noeud 106A.

Les premiers moyens 100A comprennent enfin une troisième paire de transistors complémentaires 107A et 108A. Le transistor 107A est à canal P et le transistor 108A est à canal N. La source des transistors 107A et 108A est reliée au noeud 106A. Le drain des transistors 107A et 108A est relié à l'entrée de report amont (Rᵢ₋₁S). La grille du transistor 107 est reliée à l'entrée de premiers bits (Aᵢ) et la grille du transistor 108A est reliée au noeud 103A. Le signal OU EXCLUSIF des deux bits d'entrée (Aᵢ⊕Rᵢ₋₁S) est obtenu au noeud 106A.

Les premiers moyens 100A fonctionnent de la façon suivante :
Lorsque le signal de premiers bits (Aᵢ) est une tension électrique positive V qui correspond à l'état logique haut, le transistor 101A est bloqué tandis que le transistor 102A est passant. Dans cette configuration, une tension nulle qui correspond à l'état logique bas est obtenue au noeud 103A.

Lorsque le signal de premiers bits (Aᵢ) est une tension nulle, le transistor 101A est passant tandis que le transistor 102A est bloqué. Dans ce cas, une tension électrique positive est obtenue au noeud 103A. La paire de transistors 101A et 102A jouent le rôle d'inverseurs du signal d'entrée de premiers bits (Aᵢ).

Quand le signal de premiers bits (Aᵢ) est à l'état haut logique, le signal complémenté (A̅ᵢ̅) est à l'état bas logique. La paire des transistors 104A et 105A jouent également le rôle d'inverseur, faisant ainsi apparaître le signal complémenté (R̅ᵢ̅₋̅₁̅S̅) au noeud 106A. La porte de transmission constituée par la paire de transistors 107A et 108A est ouverte.

Quand le signal de premiers bits (Aᵢ) est à l'état bas logique, le signal complémenté (A̅ᵢ̅) est à l'état haut logique. La porte de transmission constituée par la paire de transistors 107A et 108A est maintenant fermée, faisant passer le signal (Rᵢ₋₁S) au noeud 106A. La paire de transistors 104A et 105A est inactive. On obtient ainsi au noeud 106A le signal de OU EXCLUSIF de l'un des bits d'entrée avec le report amont (Aᵢ⊕Rᵢ₋₁S).

L'additionneur comprend ensuite une paire 400A constituée de transistors 401A et 402A de polarités opposées. Cette paire produit l'inversion du signal de OU EXCLUSIF de l'un (Aᵢ) des deux bits d'entrée avec le report amont (Aᵢ⊕Rᵢ₋₁S). La paire 400A est constituée d'un transistor 401A à canal P et d'un transistor 402 à canal N. La grille de chacun des transistors 401A et 402A est reliée au signal de OU EXCLUSIF de l'un (Aᵢ) des deux bits d'entrée avec le report amont (Aᵢ⊕Rᵢ₋₁S). Une tension électrique V est appliquée au drain du transistor 401A. V a une valeur de 5 Volts par exemple dans le cas de transistors technologie MOS. La masse est appliquée à la source du transistor 402A. Le signal de OU EXCLUSIF complémenté de l'un (Aᵢ) des deux bits d'entrée avec le report amont (A̅ᵢ̅⊕̅R̅ᵢ̅₋̅₁̅S̅) est obtenu au noeud 403A reliant la source du transistor 401A au drain du transistor 402A. La paire de transistors 401A et 402A a le même fonctionnement que la paire de transistors 101A et 102A décrite précédemment.

L'additionneur 2A comprend ensuite des seconds moyens 200A pour produire un signal de résultat (Sᵢ) par une fonction OU EXCLUSIF de l'autre des deux bits (Bᵢ) avec le signal de OU EXCLUSIF de l'un des deux bits avec le report amont (Aᵢ⊕Rᵢ₋₁S) et son complément (A̅ᵢ̅⊕̅R̅ᵢ̅₋̅₁̅S̅). Ces seconds moyens 200A comprennent deux paires de transistors de polarité opposée. La première paire est constituée des transistors 201A et 202A. Le transistor 201A est à canal P et le transistor 202A est à canal N. La grille de chacun des transistors 201A et 202A est reliée à l'entrée de seconds bits (Bᵢ). Le drain du transistor 201A est relié au signal de OU EXCLUSIF de l'un des deux bits d'entrée avec le report amont (Aᵢ⊕Rᵢ₋₁S). La source du transistor 201A est reliée au complément du signal de OU EXCLUSIF de l'un des deux bits d'entrée avec le report amont (A̅ᵢ̅⊕̅R̅ᵢ̅₋̅₁̅S̅). Le signal de résultat (Sᵢ) est obtenu à un noeud 203A reliant la source du transistor 201A au drain du transistor 202A.

La seconde paire est constituée des transistors 204A et 205A. Le transistor 204A est à canal P et le transistor 205A est à canal N. Le drain de chacun des transistors 204A et 205A est relié à l'entrée de seconds bits (Bᵢ). La grille du transistor 204A est reliée au signal de OU EXCLUSIF de l'un des deux bits d'entrée avec le report amont (Aᵢ⊕Rᵢ₋₁S). La grille du transistor 205A est reliée au signal de OU EXCLUSIF complémenté de l'un des deux bits d'entrée avec le report amont (A̅ᵢ̅⊕̅R̅ᵢ̅₋̅₁̅S̅). Le signal de résultat (Si) est obtenu au noeud 203A reliant la source de chacun des transistors 204A et 205A.

Les seconds moyens 200A fonctionnent de la façon suivante :
Quand le signal de OU EXCLUSIF de l'un des deux bits d'entrée avec le report amont (Aᵢ⊕Rᵢ₋₁S) est à l'état logique haut, le signal complémenté (A̅ᵢ̅⊕̅R̅ᵢ̅₋̅₁̅S̅) est à l'état logique bas. La paire de transistors 201A et 202A joue le rôle d'inverseurs, faisant apparaitre le signal complémenté (B̅ᵢ̅) au noeud 203A. La porte des transmissions constituée par la paire de transistors 204A et 205A est ouverte.

Quand le signal de OU EXCLUSIF de l'un des deux bits d'entrée avec le report amont (A̅ᵢ̅⊕̅R̅ᵢ̅₋̅₁̅S̅) est à l'état logique bas, le signal complémenté (A̅ᵢ̅⊕̅R̅ᵢ̅₋̅₁̅S̅) est à l'état logique haut. La porte de transmission constituée par la paire de transistors 204A et 205A est maintenant fermée, faisant ainsi apparaître le signal (Bᵢ) au noeud 203A. La paire de transistors 201A et 202A est inactive.

L'additionneur comprend enfin des troisièmes moyens 300A pour produire un signal de report aval (RᵢS) par une fonction de transmission comprenant deux portes de transmission commandées par le signal de OU EXCLUSIF de l'un des deux bits d'entrée avec le report amont (Aᵢ⊕Rᵢ₋₁S) et son complément, l'une des portes permettant le passage du signal de l'entrée de premiers bits (Aᵢ) et l'autre permettant le passage du signal de l'autre des bits d'entrée (Bᵢ).

Les troisièmes moyens 300A comprennent deux paires de transistors de polarité opposée. La première paire est constituée des transistors 301A et 302A. Le transistor 301A est à canal N et le transistor 302A est à canal P. La grille du transistor 301A est reliée au complément du signal de OU EXCLUSIF de l'un des deux bits d'entrée avec le report amont (A̅ᵢ̅⊕̅R̅ᵢ̅₋̅₁̅S̅). La grille du transistor 302A est reliée au signal de OU EXCLUSIF de l'un des deux bits d'entrée avec le report amont (Aᵢ⊕Rᵢ₋₁S). Le drain des transistors 301A et 302A est relié à l'entrée de premiers bits (Aᵢ). Le signal de report aval (RᵢS) est obtenu au noeud 303A reliant la source des transistors 301A et 302A. La seconde paire est constituée des transistors 304A et 305A. Le transistor 304A est à canal P et le transistor 305A est à canal N. La grille du transistor 304A est reliée au complément du signal de OU EXCLUSIF de l'un des deux bits d'entrée avec le report amont (A̅ᵢ̅⊕̅R̅ᵢ̅₋̅₁̅S̅). La grille du transistor 305A est reliée au signal de OU EXCLUSIF de l'un des deux bits d'entrée avec le report amont (Aᵢ⊕Rᵢ₋₁S). La source de chacun des transistors 304A et 305A est reliée au second bit d'entrée (Bᵢ). Le signal de report aval (RᵢS) est obtenu au noeud 303A reliant le drain de chacun des transistors 304A et 305A.

Les troisièmes moyens 300A fonctionnent de la façon suivante:
Quand le signal de OU EXCLUSIF de l'un des deux bits d'entrée avec le report amont (Aᵢ⊕Rᵢ₋₁S) est à l'état logique bas, le signal complémenté (A̅ᵢ̅⊕̅R̅ᵢ̅₋̅₁̅S̅) est à l'état haut. La porte de transmission constituée par les transistors 301A et 302A est fermée faisant apparaître le signal (Aᵢ) au noeud 303A. La porte de transmission constituée par la paire de transistors 304A et 305A est inactive.

Quand le signal de OU EXCLUSIF de l'un des deux bits d'entrée avec le report amont (Aᵢ⊕Rᵢ₋₁S) est à l'état logique haut, le signal complémenté (A̅ᵢ̅⊕̅R̅ᵢ̅₋̅₁̅S̅) est à l'état bas. La porte de transmission constituée par les transistors 304A et 305A est maintenant fermée, faisant apparaître le signal (Bᵢ) au noeud 303A. La paire des transistors 301A et 302A est inactive.

On remarquera que dans l'additionneur 2A à 16 transistors que l'on vient de décrire, les grilles des transistors 301A, 302A, 304A et 305A sont maintenant attaquées par le signal de report amont (Rᵢ₋₁S) (plus exactement par le signal de OU EXCLUSIF de l'un des deux bits d'entrée avec le report amont (Aᵢ⊕Rᵢ₋₁S) et son complément (A̅ᵢ̅⊕̅R̅ᵢ̅₋̅₁̅S̅)). Une telle structure permet ainsi d'accélérer la propagation du report dans un dispositif de calcul binaire de type comprenant plusieurs cellules d'addition comme celles décrites en référence à la figure 1 selon l'invention dans lesquelles le report aval (RᵢS) de la cellule de rang i (0<i<n-2) est relié à l'entrée de report amont (RᵢS) de la cellule de rang i+1.

On se réfère maintenant à la figure 2 qui illustre schématiquement un additionneur complet à trois entrées sur un bit comportant 15 transistors conformément à l'invention.

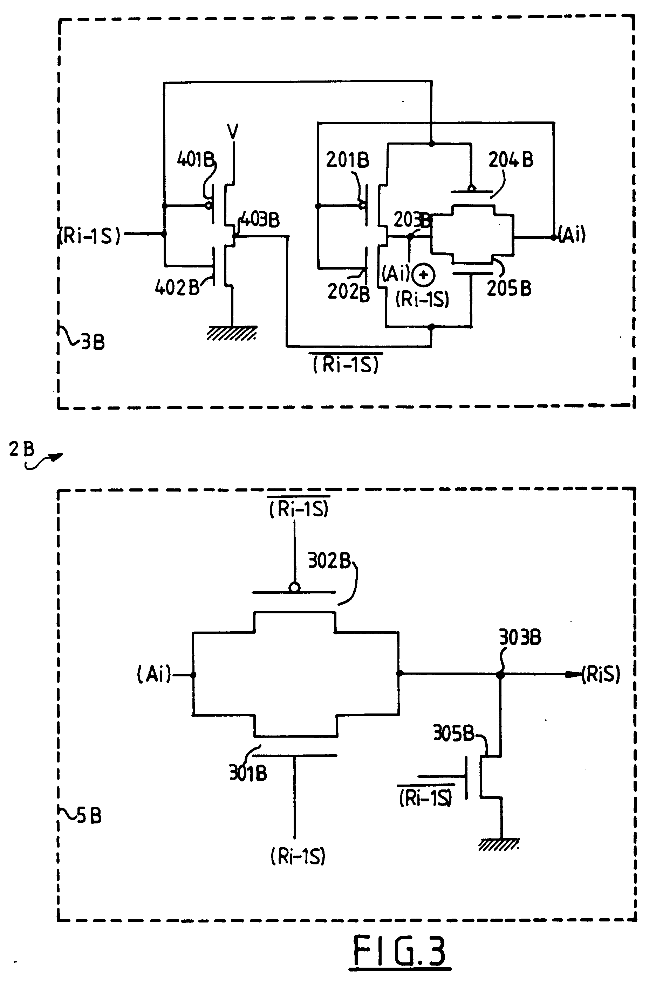

La cellule d'addition 4A représentée sur la figure 2 est pratiquement identique à la cellule d'addition 4 représentée sur la figure 3 de la Demande de Brevet français No 87 03758 et de la Demande de Brevet européen correspondante. Elle n'en diffère que par la permutation de l'entrée de seconds bits (Bᵢ) avec l'entrée de report amont (Rᵢ₋₁S) et par l'ajout d'un A sur les références des éléments essentiels et constitutifs de l'additionneur 4A selon l'invention.

Pour obtenir un additionneur 4A comportant seulement 15 transistors, on modifie les premiers moyens 100A de l'additionneur 2A décrits en référence à la figure 1. Les autres moyens 250A, 350A et la paire 450A de l'additionneur 4A sont identiques respectivement aux moyens 200A, 300A et 400A de l'additionneur 2A décrits en référence à la figure 1.

Les premiers moyens 109A de l'additionneur 4A comprennent une paire de transistors 110A et 111A à canal P. La grille du transistor 110A est reliée à l'entrée de premiers bits (Aᵢ) et la grille du transistor 111A est reliée à l'entrée de report amont (Rᵢ₋₁S). Une tension électrique V est appliquée au drain du transistor 110A. V a une valeur de 5 Volts par exemple dans le cas des transistors en technologie MOS. La source du transistor 110A est reliée au drain du transistor 111A. La source du transistor 111A est reliée à un noeud 112A.

Les premiers moyens 109A de l'additionneur 4A comprennent encore une paire de transistors constituée d'un transistor 113A à canal N et d'un transistor 114A à canal N. La source du transistor 113A est reliée à l'entrée de premiers bits (Aᵢ). La grille du transistor 113A est reliée à l'entrée de report amont (Rᵢ₋₁S). La source du transistor 114A est reliée à l'entrée de report amont (Rᵢ₋₁S). La grille du transistor 114A est reliée à l'entrée de premiers bits (Aᵢ). Le signal de OU EXCLUSIF, complémenté de l'un (Aᵢ) des deux bits d'entrée avec le report amont (A̅ᵢ̅⊕̅R̅ᵢ̅₋̅₁̅S̅) est obtenu au noeud 112A reliant la source du transistor 113A et le drain du transistor 114A.

Les premiers moyens 109A de l'additionneur 4A comprennent enfin un transistor 115A à canal P. La source du transistor 115A est reliée au noeud 112A. Une tension électrique V est appliquée au drain du transistor 115A. La grille du transistor 115A est reliée au noeud 453A de la paire 450A constituée des transistors 451A et 452A identiques aux transistors 401A et 402A de la paire 400A décrits en référence à la figure 1. Le rôle du transistor 115A est de mettre le complément (A̅ᵢ̅⊕̅R̅ᵢ̅₋̅₁̅S̅) via le noeud 112A à l'état logique haut lorsque le transistor 115A est activé, c'est-à-dire lorsque le signal (Aᵢ⊕Rᵢ₋₁S) appliqué à la grille du transistor 115A est à l'état logique bas.

Les additionneurs 2A et 4A que l'on vient de décrire constituent un premier objet de l'invention. Certains moyens de ces additionneurs peuvent être avantageusement utilisés pour la réalisation d'un dispositif de calcul binaire du type comprenant au moins une cellule de base pour additionner un premier bit (Aᵢ) ou premier opérande A de valeur binaire quelconque à un second bit (Bᵢ) ou second opérande B de valeur binaire fixe et connue.

Bien entendu, la valeur spécifique de l'opérande fixe détermine la structure de chaque cellule d'un dispositif de calcul binaire destiné à additionner un opérande fixe de valeur connue et un opérande de valeur quelconque. Ainsi, dans un dispositif de calcul binaire conforme à l'invention, il y a deux types de cellules :les cellules associées à un bit de l'opérande fixe de valeur logique "0" et les cellules associées à un bit de l'opérande fixe de valeur logique "1".

On fait maintenant référence à la figure 3 qui illustre une cellule d'un dispositif de calcul binaire associée à un opérande fixe de valeur logique "0". Avantageusement, la cellule 2B se déduit de la cellule 2A décrite en référence à la figure 1 par suppression des moyens 100A et d'un transistor dans les moyens 300A, par la modification des entrées et par l'ajout d'un B sur les références des éléments constitutifs et essentiels de la cellule 2B selon l'invention.

La cellule 2B comprend un premier module 3B pour délivrer un signal de OU EXCLUSIF de l'un des deux bits d'entrée avec le report amont (Aᵢ⊕Rᵢ₋₁S) et un second module 5B pour produire un signal de report aval (RᵢS) par une fonction de transmission comprenant deux portes de transmission com-mandées par le report amont (Rᵢ₋₁S) et son complément (R̅ᵢ̅₋̅₁̅S̅), l'une des portes permettant le passage de l'un des deux signaux des bits d'entrée (Aᵢ) et l'autre des portes permettant le passage du bit de l'opérande fixe de valeur logique "0".

Le premier module 3B comprend une paire de transistors 401B, 402B, respectivement de canal P et de canal N. La grille de chacun des transistors 401B, 402B est reliée à l'entrée de report amont (Rᵢ₋₁S). Une tension électrique positive V est appliquée au drain du transistor 401B, la masse est appliquée à la source du transistor 402B. La source du transistor 401B et le drain du transistor 402B sont reliés à un noeud 403B. Le module 3B comprend encore une paire de transistors 201B, 202B, respectivement de canal P et de canal N. Le drain du transistor 201B est relié à l'entrée du report amont (Rᵢ₋₁S) et la source du transistor 202B est reliée au noeud 403B. La grille de chacun des transistors 201B et 202B est reliée à l'entrée de premiers bits (Aᵢ) de l'opérande A. La source du transistor 201B et le drain du transistor 202B sont reliés à un autre noeud 203B. Le module 3B comprend enfin une paire de transistors 204B, 205B respectivement de canal P et de canal N. La source de chacun des transistors 204B, 205B est reliée à l'autre noeud 203B. Le drain de chacun des deux transistors 204B, 205B est reliée à l'entrée de premiers bits (Aᵢ) de l'opérande A. La grille du transistor 204B est reliée à l'entrée de report amont (Rᵢ₋₁S) et la grille du transistor 205B est reliée à l'un des noeuds 403B. Le signal OU EXCLUSIF des bits de l'opérande A avec le report amont (Aᵢ⊕Rᵢ₋₁S) est obtenu au noeud 203B. Le fonctionnement du module 3B est identique au fonctionnement des moyens 400A et 200A décrits en référence à la figure 1 selon l'invention.

Le second module 5B de la cellule 2B associée à un bit (Bᵢ) de valeur logique "0" de l'opérande B fixe comprend une paire de transistors 301B, 302B respectivement de canal N et de canal P. La grille du transistor 301B est reliée au signal de report amont (Rᵢ₋₁S), la grille du transistor 302B est reliée au complément du signal de report amont (R̅ᵢ̅₋̅₁̅S̅). Le drain de chacun des transistors 301B, 302B est relié au bit (Aᵢ) de l'opérande A. La source de chacun des transistors 301B, 302B est reliée à un noeud 303B. Le second module 5B comprend encore un transistor 305B de canal N dont la source est à la masse, dont la grille est commandée par le complément du signal de report amont (R̅ᵢ̅₋̅₁̅S̅) et dont le drain est relié au noeud 303B. Le signal de report aval (RᵢS) est obtenu au noeud 303B reliant la source de chacun des transistors 301B et 302B avec le drain du transistor 305B.

Le module 5B fonctionne de la façon suivante. Quand le signal de report amont (Rᵢ₋₁S) est à l'état logique haut, le signal complémenté (R̅ᵢ̅₋̅₁̅S̅) est à l'état bas. La porte de transmission constituée par les transistors 301B et 302B est fermée faisant apparaître le signal (Aᵢ) au noeud 303B. La porte de transmission constituée par le transistor 305B est inactive. Quand le signal de report amont (Rᵢ₋₁S) est à l'état logique bas, le signal complémenté (R̅ᵢ̅₋̅₁̅S̅) est à l'état haut. La porte de transmission constituée par le transistor 305B est maintenant fermée, faisant apparaître le signal de masse, c'est-à-dire le signal (Bᵢ) de valeur logique "0" au noeud 303B. La paire de transistors 301B et 302B est inactive.

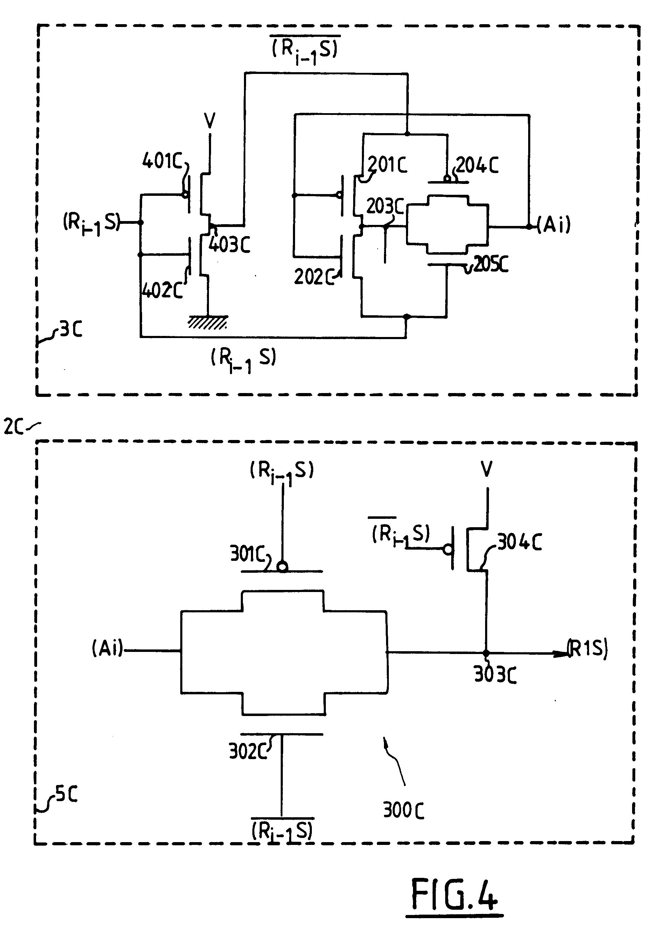

On fait maintenant référence à la figure 4 qui illustre une cellule d'addition 2C pour additionner un premier bit (Aᵢ) ou premier opérande A de valeur binaire quelconque à un second bit (Bᵢ) ou second opérande B de valeur binaire fixe égal à "1".

La cellule 2C comprend un premier module 3C pour délivrer un signal de OU EXCLUSIF de l'un des deux bits d'entrée avec le report amont (Aᵢ⊕Rᵢ₋₁S) et un second module 5C pour produire un signal de report aval (RᵢS) par une fonction de transmission comprenant deux portes de transmission commandées par le report amont (Rᵢ₋₁S) et son complément (R̅ᵢ̅₋̅₁̅S̅), l'une des portes permettant le passage de l'un des deux signaux des bits d'entrée (Aᵢ) et l'autre des portes permettant le passage du bit de l'opérande fixe de valeur logique "1".

Le module 3C comprend une paire de transistors 401C, 402C respectivement de canal P et de canal N. La grille de chacun des transistors 401C et 402C est reliée à l'entrée de report amont (Rᵢ₋₁S). Une tension électrique positive V est appliquée au drain du transistor 401C, la masse est appliquée à la source du transistor 402C. La source du transistor 401C et le drain du transistor 402C sont reliés à un noeud 403C. Le module 3C comprend encore une paire de transistors 201C, 202C respectivement de canal P et de canal N. Le drain du transistor 201C est relié au noeud 403C et la source du transistor 202C est reliée à l'entrée de report amont (Rᵢ₋₁S). La grille de chacun des transistors 201C, 202C est reliée à l'entrée de premiers bits (Aᵢ) de l'opérande A. La source du transistor 201C et le drain du transistor 202C sont reliés au noeud 203C. Le module 3C comprend enfin une paire de transistors 204C, 205C, respectivement de canal P et de canal N. La source de chacun des transistors 204C et 205C est reliée au noeud 203C. Le drain de chacun des transistors 204C et 205C est relié à l'entrée de premiers bits (Aᵢ) de l'opérande A. La grille du transistor 204C est reliée au noeud 403C et la grille du transistor 205C est reliée à l'entrée de report amont (Rᵢ₋₁S). Le signal de OU EXCLUSIF des bits de l'opérande A avec le report amont (Rᵢ₋₁S) est obtenu au noeud 203C.

Le fonctionnement du module 3C est identique au fonctionnement des moyens 450A et 200A décrits en référence aux figures 1 et 2.

Le second module 5C de la cellule d'addition 2C comprend une paire de transistors 301C, 302C respectivement de canal P et de canal N. La grille du transistor 301C est reliée au signal de report amont (Rᵢ₋₁S) et la grille du transistor 302C est reliée au complément du signal de report amont (R̅ᵢ̅₋̅₁̅S̅). Le drain de chacun des transistors 301C, 302C est relié au bit (Aᵢ) de l'opérande A, la source de chacun des transistors 301C et 302C est reliée à un noeud 303C. Le module 5C comprend encore un transistor 304C de canal P dont la source est reliée à une tension électrique positive V, dont la grille est commandée par le complément du signal de report amont (R̅ᵢ̅₋̅₁̅S̅) et dont le drain est relié au noeud 303C. Le signal de report aval (RᵢS) est obtenu au noeud 303C reliant la source de chacun des transistors 301C et 302C avec le drain du transistor 304C.

Le fonctionnement du module 5C est le suivant : quand le signal de report amont (Rᵢ₋₁S) est à l'état logique bas, le signal complémenté (R̅ᵢ̅₋̅₁̅S̅) est à l'état haut. La porte de transmission constitué par les transistors 301C et 302C est fermé faisant apparaître le signal (Aᵢ) au noeud 303C. La porte de transmission constituée par le transistor 304C est inactive.

Quand le signal de report amont (Rᵢ₋₁S) est à l'état logique haut, le signal complémenté (R̅ᵢ̅₋̅₁̅S̅) est à l'état logique bas. La porte de transmission constituée par le transistor 304C est maintenant fermée, faisant apparaître le signal de la tension V, c'est-à-dire le signal (Bᵢ) de valeur logique "1", au noeud 303C. La porte de transmission constituée par les transistors 301C et 302C est inactive.

On peut remarquer que l'on peut regrouper ces deux cellules dans un seul circuit programmable selon la valeur prise par l'opérande fixe (Bᵢ) au niveau de la métallisation, c'est-à-dire au niveau de la connexion des entrées.

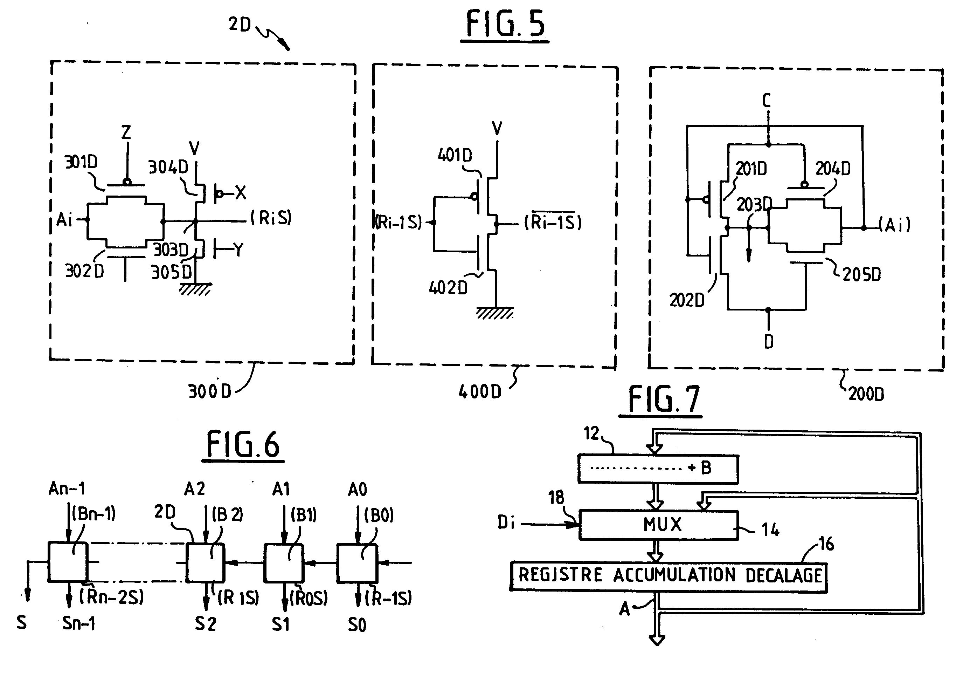

On fait maintenant référence à la figure 5 qui illustre ce regroupement à entrées programmables. On voit sur cette figure les trois éléments essentiels et constitutifs d'un additionneur dont l'un des opérandes a une valeur fixe et connue. Dans un tel additionneur 2D à entrées programmables, on retrouve les éléments constitutifs et essentiels des précédents additionneurs 2B et 2C dont les références sont maintenant suivies d'un D. Les moyens 300D sont identiques aux moyens 300A décrits en référence à la figure 1. Ils n'en diffèrent que par les signaux qui attaquent les grilles et les drains des transistors.

Dans le cas d'un opérande fixe de valeur logique égale à "0", la grille du transistor 304D reçoit la tension électrique de potentiel V (X=V). La grille du transistor 305D reçoit le complément du signal de report amont (R̅ᵢ̅₋̅₁̅S̅) (Y=(R̅ᵢ̅₋̅₁̅S̅). La grille du transistor 301D reçoit le complément du signal de report amont (R̅ᵢ̅₋̅₁̅S̅) (Z=(R̅ᵢ̅₋̅₁̅S̅)). La grille du transistor 302D reçoit le signal de report amont (Rᵢ₋₁S) (T=(Rᵢ₋₁S). Le drain du transistor 201D et la grille du transistor 204D reçoivent le signal de report amont (Rᵢ₋₁S) (C=(Rᵢ₋₁S)). La source du transistor 202D et la grille du transistor 205D reçoivent le complément du signal de report amont (R̅ᵢ̅₋̅₁̅S̅) (D=(R̅ᵢ̅₋̅₁̅S̅)).

Dans le cas d'un opérande fixe de valeur logique égale à "1", la grille du transistor 304D reçoit le complément du signal (R̅ᵢ̅₋̅₁̅S̅). La grille du transistor 305D est à la masse. La grille du transistor 301D reçoit un signal de report amont (Rᵢ₋₁S). La grille du transistor 302D reçoit le complément du signal de report amont (R̅ᵢ̅₋̅₁̅S̅). Le drain du transistor 301D et la grille du transistor 304D reçoivent le complément du signal de report amont (R̅ᵢ̅₋̅₁̅S̅). La source du transistor 302D et la grille du transistor 305D reçoivent le signal de report amont (Rᵢ₋₁S).

On fait maintenant référence à la figure 6 qui représente un additionneur selon l'invention, qui comprend un ensemble de cellules dites d'addition 2D reliées en série. Chaque cellule reçoit un bit (Aᵢ), où 0<i<n-1, de l'opérande variable An-1, An-2, ... A0.

Chaque cellule 2D a une structure spécifique, programmable au niveau de sa métallisation et qui est fonction de la valeur logique du bit (Bᵢ) de l'opérande fixe et connu, Bn-1, Bn-2, ..., B₀.

Les additionneurs 2B, 2c et 2D que l'on vient de décrire constituent un second objet de l'invention. Ces additionneurs peuvent être avantageusement utilisés pour la réalisation d'un multiplieur binaire pour multiplier un opérande de valeur quelconque avec un opérande de valeur fixe et connue. Ceci constitue le troisième objet de l'invention.

On fait maintenant référence à la figure 7 qui illustre un multiplieur binaire selon l'invention. Il comprend un additionneur 12 selon l'invention, un multiplexeur 14 et un registre d'accumulation et de décalage 16.

Les entrées et les sorties des éléments constituant le multiplieur sont de type parallèle. Le registre 16 comprend une entrée et une sortie. L'additionneur 12 comprend une entrée reliée à la sortie du registre 16, et une sortie. L'additionneur 12 est celui décrit en référence à la figure 6, il n'en diffère que par le remplacement de l'opérande A par l'opérande D. Ainsi l'additionneur 12 comprend un premier module délivrant un signal de OU EXCLUSIF (Dᵢ⊕(Rᵢ₋₁S) et un second module délivrant un signal de report aval (RᵢS). Le multiplexeur 14 comprend deux entrées, l'une reliée à la sortie de l'additionneur 12, et l'autre reliée à la sortie du registre 16. La sortie du multiplexeur 14 est reliée à l'entrée du registre 16. L'opérande fixe B est connu et matérialisé dans la structure de l'additionneur 12 comme on l'a décrit en référence aux figures 3 à 6. L'opérande non fixe D est appliquée sous forme série sur une entrée de commande 18 du multiplexeur 14.

Le multiplieur selon l'invention fonctionne de la manière suivante. L'additionneur 12 effectue à chaque coup d'horloge une addition entre le contenu du registre à décalage 16 et l'opérande fixe B. Si le bit (Dᵢ) de rang i, où 0<i<n-1, de l'opérande D appliqué sur l'entrée 18 du multiplexeur 14 a la valeur "0", le multiplexeur 14 est commandé de manière à relier la sortie du registre 16 à l'entrée de ce multiplieur 14. Le registre à décalage 16 est ainsi rechargé par la même valeur qu'il contenait à l'instant précédent divisé par 2 (décalage). En revanche, si le bit (Dᵢ) a la valeur "1", l'entrée du registre 16 se trouve reliée à la sortie de l'additionneur 12. Dans ce cas, le registre à décalage 16 est rechargé par le résultat délivré par l'additionneur 12.

Dans le mode de réalisation représenté sur la figure 7, l'additionneur peut uniquement additionner le contenu du registre 16 avec l'opérande fixe B. Dans le cas où D est un nombre négatif, c'est-à-dire (Dₙ₋₁=1), on doit soustraire du contenu du registre 16, la valeur B.

Ceci ne peut être réalisé avec l'additionneur 12 du multiplieur de la figure 7, qui ne peut, par construction, qu'additionner que le seul opérande B.

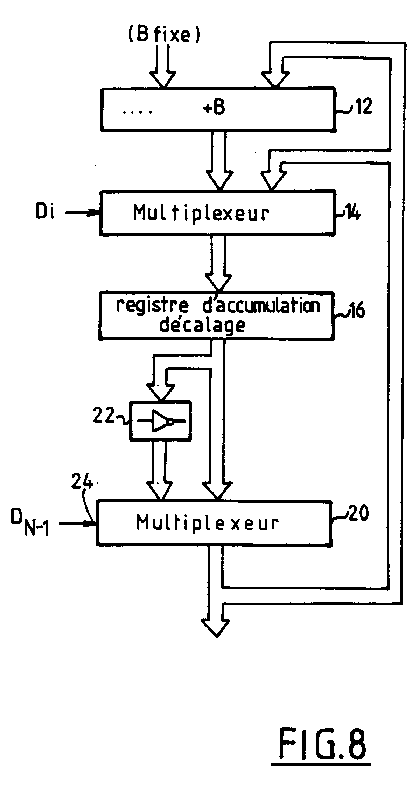

Pour tourner cette difficulté, on se propose de modifier le multiplieur de la figure 7 de manière à pouvoir additionner l'opposé de l'opérande fixe B. Un tel multiplieur modifié est représenté sur la figure 8.

Dans ce multiplieur, les éléments identiques à ceux du multiplieur de la figure 7 portent les mêmes références. Le multiplieur de la figure 8 comprend des éléments supplémentaires pour permettre d'inverser le contenu du registre 16. Ces moyens comprennent un inverseur 22 dont l'entrée reçoit la sortie du registre 16 et d'un multiplexeur 20 dont une première entrée reçoit la sortie du registre 16 et dont une seconde entrée reçoit la sortie de l'inverseur 22. La sortie du multiplexeur 20 est reliée à l'entrée de l'additionneur 12. Le multiplexeur 20 comprend une entrée de commande 24 pour recevoir le bit de poids le plus fort Dn-1 de l'opérande série D. Le multiplexeur 20 délivre ainsi sur l'entrée de l'additionneur 12 le contenu du registre 16 si Dn-1 est égal à 0, ou le complément du contenu du registre 16, si Dn-1 est égal à 1. L'additionneur 12 ajoute la valeur B au contenu du registre à décalage 16 dont la parité est ainsi déterminée par le multiplexeur 20. Le résultat de cette somme (complément du contenu du registre 16+B) est une seconde fois complémenté pour obtenir le bon résultat (contenu du registre 16-B).

## Revendications

1. Dispositif de calcul binaire du type comprenant au moins une cellule possédant :
- une entrée d'un premier chiffre binaire ou bit (Aᵢ),
- une entrée d'un second bit (Bᵢ),
- une entrée d'un bit de report amont (Rᵢ₋₁S),
caractérisé en ce qu'il comprend :
- des premiers moyens (100A, 109A) pour engendrer un premier signal et son complément, le premier signal étant représentatif du OU EXCLUSIF de l'un desdits premier et second bits d'entrée avec le bit de report amont, le complément du premier étant produit par inversion dudit premier signal,
- des seconds moyens (200A) pour produire un signal de résultat (Si) de la cellule par une fonction OU EXCLUSIF de l'autre desdits premier et second bits d'entrée (Bᵢ) avec ledit premier signal, et
- des troisièmes moyens (300A) pour produire un signal de report aval (RᵢS) par une fonction de transmission comprenant deux portes de transmission commandées par ledit premier signal et son complément, l'une des portes permettant le passage de l'un (Aᵢ) des signaux des premier et second bits d'entrée et l'autre des portes permettant le passage de l'autre (Bᵢ) des signaux des premier et second bits d'entrée.

2. Dispositif selon la revendication 1, caractérisé en ce que les premiers moyens (100A) comprennent:
- une première paire de transistors (101A, 102A) de polarités opposées, la grille de chacun des transistors (101A, 102A) étant reliée à l'entrée de premier bit (Aᵢ), une tension électrique positive étant appliquée au drain de l'un (101A) des transistors, la masse étant appliquée à la source de l'autre transistor (102A), la source de l'un (101A) des transistors et le drain de l'autre (102A) transistor étant reliés à un premier noeud (103A) ; et
- une seconde paire de transistors (104A, 105A) de polarités opposées, le drain de l'un (104A) des transistors étant relié à l'entrée de premier bit (Aᵢ) et la source de l'autre transistor (105A) étant reliée au premier noeud (103A), la grille de chacun des transistors (104A, 105A) étant reliée à l'entrée de report amont (Rᵢ₋₁S), la source de l'un (104) des transistors et le drain de l'autre (105A) transistor étant reliés à un second noeud (106A) ; et
- une troisième paire de transistors (107A, 108A) de polarités opposées, la source de chacun des transistors (107A, 108A) étant reliée au second noeud (106A), le drain de chacun des deux transistors (107A, 108A) étant relié à l'entrée de report amont (Rᵢ₋₁S), la grille de l'un (107A) des transistors étant reliée à l'entrée de premier bit (Aᵢ) et la grille de l'autre (108A) transistor étant reliée au premier noeud (103A), le premier signal étant obtenu au second noeud (106A).

3. Dispositif selon la revendication 1, caractérisé en ce que les deuxièmes moyens (200A) comprennent :
- une première paire de transistors de polarités opposées, la grille de chacun des transistors (201A, 202A) étant reliée à l'entrée de second bit (Bᵢ), le drain de l'un (201A) des transistors étant relié au premier signal, la source de l'autre (202A) transistor étant reliée au complément du premier signal, le signal de résultat étant obtenu à un troisième noeud (203A) reliant la source de l'un (201A) des transistors au drain de l'autre (202A) transistor ; et
- une seconde paire de transistors de polarité opposées, le drain de chacun des transistors (204A, 205A) étant relié à l'entrée de second bit (Bᵢ), la grille de l'un (204A) des transistors étant reliée au premier signal, et la grille de l'autre (205A) des transistors étant reliée au complément du premier signal, le signal de résultat étant obtenu au troisième noeud (203A) reliant la source de chacun des transistors (204A, 205A).

4. Dispositif selon la revendication 1, caractérisé en ce que les troisièmes moyens (300A) comprennent :
- une première paire de transistors de polarités opposées, la grille de l'un (301A) des transistors étant reliée au premier signal et la grille de l'autre (302A) transistor étant reliée au complément du premier signal, le drain de chacun des transistors (301A, 302A) étant relié à l'entrée de second bit (Bᵢ), le signal de report aval (Rᵢ) étant obtenu à un quatrième noeud (303) reliant la source de chacun des transistors (301A), 302A) ;
- une seconde paire de transistors de polarités opposées, la grille de l'un (304A) des transistors étant reliée au premier signal et la grille de l'autre (305A) transistor étant reliée au complément du premier signal, la source de chacun des transistors (304A, 305A) étant reliée à l'entrée de premiers bits (Aᵢ), le signal de report aval (Rᵢ) étant obtenu au quatrième noeud (303A) reliant le drain de chacun des transistors (304A, 305A).

5. Dispositif de calcul binaire du type comprenant au moins une cellule de base pour additionner un premier opérande A de n bits Aₙ₋₁,..., Aₒ, de valeur binaire quelconque, à un second opérande B de n bits, Bₙ₋₁,..., Bₒ, de valeur binaire fixe et connue, ledit dispositif comprenant n cellules de base, chaque cellule de base comprenant des moyens d'entrée d'un premier bit d'entrée (Ai) ;d'un second bit d'entrée (Bi) ainsi qu'un bit de report amont (Ri-1 S), et des moyens de sortie d'un bit de résultat (Si) et d'un bit de report aval (Ri S) ;
la sortie de report aval de la cellule de base de rang j, (0 < j < n-2) étant reliée à l'entrée de report amont de la cellule de base de rang j + 1,
ledit dispositif étant caractérisé par le fait
que la structure de chaque cellule d'addition est déterminée par la valeur spécifique du bit Bi de l'opérande fixe B, et
en ce que chaque cellule comprend :
des moyens inverseurs (401B, 402B, 401C, 402C) pour engendrer un signal complémentaire du report amont (Rᵢ₋₁S) ;
- un premier module (3B, 3C) pour produire un signal de résultat (Si) de la cellule, ledit signal de résultat (Si) étant représentatif d'une fonction OU EXCLUSIF dudit premier bit d'entrée (Ai) de valeur quelconque avec ledit signal de report amont (Rᵢ₋₁S) et son complément (Rᵢ₋₁S) ; et
- un second module (5B, 5C) pour produire un signal de report aval (RᵢS) par une fonction de transmission comprenant deux portes de transmission commandées par ledit signal de report amont (Rᵢ₋₁S) et son complément (Rᵢ₋₁S), l'une des portes permettant le passage de l'un (Aᵢ) des deux signaux des premier et second bits d'entrée et l'autre des portes permettant le passage de l'autre (Bᵢ) des deux signaux des premier et second bits d'entrée.

6. Dispositif de calcul binaire selon la revendication 5, caractérisé en ce que le premier module (3B) de chaque cellule associé à un bit (Bᵢ) de valeur logique "0" de l'opérande fixe (B) comprend :
- une première paire de transistors (401B, 402B), de polarités opposées, la grille de chacun des transistors (401B, 402B) étant reliée à l'entrée de report amont (Rᵢ₋₁S), une tension électrique positive (V) étant appliquée au drain de l'un (401B) des transistors, la masse étant appliquée à la source de l'autre transistor (402B), la source de l'un (401B) des transistors et le drain de l'autre (402B) des transistors étant reliés à un cinquième noeud (403B) ;
- une seconde paire de transistors (201B, 202B), de polarités opposées, le drain de l'un (201B) des transistors étant relié à l'entrée de report amont (Rᵢ₋₁S) et la source de l'autre transistor (202B) étant reliée au cinquième noeud (403B), la grille de chacun des transistors (201B, 202B) étant reliée à l'entrée de premier bit (Aᵢ) de l'opérande (A), la source de l'un (201B) des transistors et le drain de l'autre (202B) transistor étant reliés à un sixième noeud (203B) ; et
- une troisième paire de transistors (204B, 205B) de polarités opposées, la source de chacun des transistors (204B, 205B) étant reliée au sixième noeud (203B), le drain de chacun des transistors (204B, 205B) étant relié à l'entrée de premier bit (Aᵢ) de l'opérande (A), la grille de l'un (204B) des transistors étant reliée à l'entrée de report amont (Rᵢ₋₁S) et la grille de l'autre (205B) des transistors étant reliée à l'un des cinquième et sixième noeuds (403B), le signal de résultat représentatif du OU EXCLUSIF des bits de l'opérande A avec le report amont étant obtenu au sixième noeud (203B).

7. Dispositif de calcul binaire selon la revendication 5, caractérisé en ce que le second module (5B) de chaque cellule associée à un bit (Bᵢ) de valeur logique "0" de l'opérande (B) fixe comprend
- une première paire de transistors (301B, 302B) de polarités opposées, la grille de l'un (301B) des transistors étant reliée au signal de report amont (Rᵢ₋₁S), la grille de l'autre (302B) transistor étant reliée au complément du signal de report amont (Rᵢ₋₁S), le drain de chacun des transistors (301B, 302B) étant relié au bit (Aᵢ) de l'opérande (A), la source de chacun des transistors (301B, 302B) étant reliée à un septième noeud (303B) ; et
- un transistor (305B) de canal N dont la source est à la masse, dont la grille est commandée par le complément du signal de report amont (Rᵢ₋₁S) et dont le drain est relié au septième noeud (303B), le signal de report aval (RᵢS) étant obtenu au septième noeud (303B) reliant la source de chacun des transistors (301B, 302B) avec le drain du transistor (305B).

8. Dispositif de calcul binaire selon la revendication 5, caractérisé en ce que le premier module (3C) de chaque cellule associé à un bit (Bᵢ) de valeur logique "1" de l'opérande fixe (B) comprend :
- une première paire de transistors (401C, 402C) de polarités opposées, la grille de chacun des transistors (401C, 402C) étant reliée à l'entrée de report amont (Rᵢ₋₁S), une tension électronique positive (V) étant appliquée au drain de l'un (401C) des transistors, la masse étant appliquée à la source de l'autre transistor (402C), la source de l'un (401C) des transistors et le drain de l'autre (402C) des transistors étant reliés à un huitième noeud (403C),
- une seconde paire de transistors (201C,202C) de polarités opposées, le drain de l'un (201C) des transistors étant relié au huitième noeud (403C) et la source de l'autre transistor (202C) étant reliée à l'entrée de report amont (Rᵢ₋₁S), la grille de chacun des transistors (201C,202C) de polarités opposées, le drain de l'un (201C) des transistors étant relié au huitième noeud (403C) et la source de l'autre transistor (202C) étant reliée à l'entrée de report amont (Rᵢ₋₁S), la grille de chacun des transistors (201C,202C) étant reliée à l'entrée de premiers bits (Aᵢ) de l'opérande (A), la source de l'un (201C) des transistors et le drain de l'autre (202C) des transistors étant reliée à un neuvième noeud (203C) ; et
- une troisième paire de transistors (204C, 205C) de polarités opposées, la source de chacun des transistors (204C,205C) étant reliée au neuvième noeud (203C), le drain de chacun des huitième et neuvième noeuds (204C,205C) étant relié à l'entrée de premiers bits (Aᵢ) de l'opérande (A), la grille de l'un (204C) des transistors étant reliée à l'un des huitième et neuvième noeuds (403C) et la grille de l'autre (205C) des transistors étant reliée à l'entrée de report amont (Rᵢ₋₁S), le signal de résultat (Si) représentatif du OU EXCLUSIF des bits de l'opérande (A) avec le report amont est obtenu au neuvième noeud (203C).

9. Dispositif de calcul binaire selon la revendication 5, caractérisé en ce que le second module (5C) de chaque cellule associée à un bit (Bᵢ) de valeur logique "1" de l'opérande (B) fixe comprend :
- une première paire de transistors (301C, 302C) de polarités opposées, la grille de l'un (301C) des transistors étant reliée au signal de report amont (Rᵢ₋₁S) et la grille de l'autre (302C) étant reliée au complément du signal de report amont (Rᵢ₋₁S), le drain de chacun des transistors (301C,302C) étant relié au bit (Aᵢ) de l'opérande (A), la source de chacun des transistors (301C,302C) étant reliée à un dixième noeud (303C) ; et
- un transistor de canal P (304C) dont la source est reliée à une tension électrique positive (V dont la grille est commandée par le complément du signal de report amont (Rᵢ₁S) et dont le drain est relié au dixième noeud (303C) reliant la source de chacun des transistors (301C,302C) avec le drain du transistor (304C).

10. Dispositif de calcul binaire du type comprenant plusieurs cellules selon les revendications 5 à 9, dans lesquelles le report aval (RᵢS) de la cellule de rang (i) (0<i<n-2) est relié à l'entrée de report amont (RᵢS) de la cellule de rang (i+1), ledit dispositif étant caractérisé en ce que chaque cellule est câblée selon les valeurs du bit (Bᵢ) de l'opérande (B).

11. Multiplieur binaire parallèle-série pour la multiplication d'un opérande fixe (B) de n bits (Bₙ₋₁, Bₙ₋₂,..., B₀) par un opérande (D) de n bits (Dₙ₋₁, Dₙ₋₂,..., D₀) de valeur quelconque, ledit multiplieur comprenant un registre d'accumulation et de décalage (16) pour mémoriser un résultat partiel de la multiplication, ledit registre comportant une entrée et une sortie, ledit multiplieur étant caractérisé en ce qu'il comprend, en outre, un dispositif de calcul binaire (12) selon l'une quelconque des revendications 5 à 9 et comportant une entrée reliée à la sortie du registre (16) et une sortie, la cellule dudit dispositif de calcul binaire (12) comprenant un premier module pour délivrer un signal de OU EXCLUSIF du signal de l'opérande D avec le signal de report amont et un second module pour produire un signal de report aval (RᵢS) et un multiplexeur (14) ayant deux entrées reliées respectivement à la sortie du dispositif de calcul binaire (12) et à la sortie du registre (16), et une sortie reliée à l'entrée du registre, ledit multiplexeur comportant également une entrée de commande (18) sur laquelle est appliqué l'opérande non fixe (D) sous forme série.

12. Multiplieur selon la revendication 11, pour permettre la multiplication de deux opérandes (B) et (D) de signe contraire, caractérisé en ce que le multiplieur comprend en outre :
- un deuxième multiplexeur (20) disposé entre la sortie du registre d'accumulation et de décalage (16) et l'entrée de l'additionneur (12), ledit second multiplexeur comprenant deux entrées reliées respectivement à la sortie du registre et à la sortie d'un inverseur (22) dont l'entrée est reliée à la sortie du registre, ledit deuxième multiplexeur (20) étant commandé par le bit de poids le plus fort (Dₙ₋₁) de l'opérande (D).

## Claims

1. Binary calculation device comprising at least one cell which has:
- an input for a first binary figure or bit (Aᵢ);
- an input for a second bit (Bᵢ);
- an input for an upper carry-over bit (Rᵢ₋₁S);
characterised in that it comprises:
- first means (100A, 109A) for generating a first signal and its complement, the first signal being representative of the EXCLUSIVE OR of one of the said first and second input bits with the upper carry-over bit, the complement of the first being produced by inversion of the said first signal;
- second means (200 A) for producing a result signal (Si) of the cell by means of an EXCLUSIVE OR function of the other said first and second input bits (Bᵢ) with the said first signal; and
- third means (300A) for producing a lower carry-over signal (RᵢS) by means of a transmission function which comprises two transmission gates controlled by the said first signal and its complement, one of the gates permitting the passage of one (Aᵢ) of the signals of the first and second input bits and the other gate permitting the passage of the other (Bᵢ) signal of the first and second input bits.

2. Device according to Claim 1, characterised in that the first means (100A) comprise:
- a first pair of transistors (101A, 102A) which have opposite polarities, the gate of each of the transistors (101A, 102A) being associated with the input for the first bit (Aᵢ), a positive electrical voltage being applied to the drain of one (101A) of the transistors, earth being applied to the source of the other transistor (102A), the source of one (101A) of the transistors and the drain of the other transistor (102A) being associated with a first node (103A); and
- a second pair of transistors (104A, 105A) which have opposite polarities, the drain of one (104A) of the transistors being associated with the input for the first bit (Aᵢ) and the source of the other transistor (105A) being associated with the first node (103A), the gate of each of the transistors (104A, 105A) being associated with the upper carry-over input (Rᵢ₋₁S), the source of one (104) of the transistors and the drain of the other transistor (105A) being associated with a second node (106A); and
- a third pair of transistors (107A, 108A) which have opposite polarities, the source of each of the transistors (107A, 108A) being associated with the second node (106A), the drain of each of the two transistors (107A, 108A) being associated with the upper carry-over input (Rᵢ₋₁S), the gate of one (107A) of the transistors being associated with the input for the first bit (Aᵢ) and the gate of the other transistor (108A) being associated with the first node (103A), the first signal being obtained at the second node (106A).

3. Device according to Claim 1, characterised in that the second means (200A) comprise:
- a first pair of transistors which have opposite polarities, the gate of each of the transistors (201A, 202A) being associated with the second bit input (Bᵢ), the drain of one (201A) of the transistors being associated with the first signal, the source of the other transistor (202A) being associated with the complement of the first signal, the result signal being obtained from a third node (203A) associating the source of one (201A) of the transistors with the drain of the other transistor (202A); and
- a second pair of transistors which have opposite polarities, the drain of each (204A, 205A) of the transistors being associated with the second bit input (Bᵢ), the gate of one (204A) of the transistors being associated with the first signal, and the gate of the other (205A) transistor being associated with the complement of the first signal, the result signal being obtained from the third node (203A) associating the source of each of the transistors (204A, 205A).

4. Device according to Claim 1, characterised in that the third means (300A) comprise:
- a first pair of transistors which have opposite polarities, the gate of one (301A) of the transistors being associated with the first signal and the gate of the other transistor (302A) being associated with the complement of the first signal, the drain of each of the transistors (301A, 302A) being associated with the input for the second bit (Bᵢ), the lower carry-over signal (Rᵢ) being obtained from a fourth node (303) associating the source of each of the transistors (301A, 302A);
- a second pair of transistors which have opposite polarities, the gate of one (304A) of the transistors being associated with the first signal and the gate of the other transistor (305A) being associated with the complement of the first signal, the source of each of the transistors (304A, 305A) being associated with the input of the first bits (Aᵢ), the lower carry-over signal (Rᵢ) being obtained from the fourth node (303A) associating the drain of each of the transistors (304A, 305A).

5. Binary calculation device of the type comprising at least one basic cell for adding a first operand A of n bits Aₙ₋₁,...,Aₒ, which may have any binary value, to a second operand B of n bits Bₙ₋₁,...,Bₒ, which have a fixed and known binary value, the said device comprising n basic cells, each basic cell comprising input means for a first input bit (Ai); for a second input bit (Bi) as well as an upper carry-over bit (Ri-1S), and output means of a result bit (Si) and a lower carry-over bit (Ri-1S); the lower carry-over output of the basic cell of rank j (0 < j < n-2) being associated with the lower carry-over input of the basic cell of rank j + 1;
the said device being characterised in that the structure of each addition cell is determined by the specific value of the bit Bi of the fixed operand B; and each cell comprises:
- inverter means (401B, 402B, 401C, 402C) for generating a complementary signal of the upper carry-over (Rᵢ₋₁S);
- a first module (3B, 3C) for producing a result signal (Si) of the cell, the said result signal (Si) being representative of an EXCLUSIVE OR function of the said first input bit (Ai) which may have any value, with the said upper carry-over signal (Rᵢ₋₁S) and its complement (Rᵢ₋₁S); and
- a second module (5B, 5C) for producing a lower carry-over signal (RᵢS) by means of a transmission function comprising two transmission gates controlled by the said upper carry-over signal (Rᵢ₋₁S) and its complement (Rᵢ₋₁S), one of the gate permitting passage of one (Aᵢ) of the two signals of the first and second input bits and the other gate permitting the passage of the other (Bᵢ) of the two signals of the first and second input bits.

6. Binary calculation device according to Claim 5, characterised in that the first module (3B) of each cell associated with a bit (Bᵢ) which has a logic value "0" of the fixed operand (B) comprises:
- a first pair of transistors (401B, 402B) which have opposite polarities, the gate of each of the transistors (401B, 402B) being associated with the upper carry-over input (Rᵢ₋₁S), a positive electrical voltage (V) being applied to the drain of one (401B) of the transistors, earth being applied to the source of the other transistor (402B), the source of one (401B) of the transistors and the drain of the other (402B) transistor being associated with a fifth node (403B);
- a second pair of transistors (201B, 202B) which have opposite polarities, the drain of one (201B) of the transistors being associated with the upper carry-over input (Rᵢ₋₁S) and the source of the other transistor (202B) being associated with the fifth node (403B), the gate of each of the transistors (201B, 202B) being associated with the first bit input (Aᵢ) of the operand (A), the source of one (201B) of the transistors and the drain of the other transistor (202B) being associated with a sixth node (203B); and
- a third pair of transistors (204B, 205B) which have opposite polarities, the source of each of the transistors (204B, 205B) being associated with the sixth node (203B), the drain of each of the transistors (204B, 205B) being associated with the input for the first bit (Aᵢ) of the operand (A), the gate of one (204B) of the transistors being associated with the upper carry-over input (Rᵢ₋₁S) and the gate of the other transistor (205B) being associated with one of the fifth and sixth nodes (403B), the result signal representative of the EXCLUSIVE OR of the bits of the operand A with the upper carry-over being obtained from the sixth node (203B).

7. Binary calculation device according to Claim 5, characterised in that the second module (5B) of each cell associated with a bit (Bᵢ) having a logic value "0" of the fixed operand (B) comprises:
- a first pair of transistors (301B, 302B) which have opposite polarities, the gate of one (301B) of the transistors being associated with the upper carry-over signal (Rᵢ₋₁S), the gate of the other transistor (302B) being associated with the complement of the upper carry-over signal (Rᵢ₋₁S), the drain of each of the transistors (301B, 302B) being associated with the bit (Aᵢ) of the operand (A), the source of each of the transistors (301B, 302B) being associated with a seventh node (303B); and
- an N-channel transistor (305B), of which the source is earthed, of which the gate is controlled by the complement of the upper carry-over signal (Rᵢ₋₁S), and of which the drain is associated with the seventh node (303B), the lower carry-over signal (RᵢS) being obtained from the seventh node (303B) associating the source of each of the transistors (301B, 302B) with the drain of the transistor (305B).

8. Binary calculation device according to Claim 5, characterised in that the first module (3C) of each cell associated with a bit (Bᵢ) which has a logic value "1" of the fixed operand (B) comprises:
- a first pair of transistors (401C, 402C) which have opposite polarities, the gate of each of the transistors (401C, 402C) being associated with the upper carry-over input (Rᵢ₋₁S), a positive electronic voltage (V) being applied to the drain of one (401C) of the transistors, earth being applied to the source of the other transistor (402C), the source of one (401C) of the transistors and the drain of the other transistor (402C) being associated with an eighth node (403C);
- a second pair of transistors (201C, 202C) which have opposite polarities, the drain of one (201C) of the transistors being associated with the eighth node (403C) and the source of the other transistor (202C) being associated with the upper carry-over input (Rᵢ₋₁S), the gate of each of the transistors (201C, 202C) of opposite polarity, the drain of one (201C) of the transistors being associated with the eighth node (403C) and the source of the other transistor (202C) being associated with the upper carry-over input (Rᵢ₋₁S), the gate of each of the transistors (201C, 202C) being associated with the input for first bits (Aᵢ) of the operand (A), the source of one (201C) of the transistors and the drain of the other transistor (202C) being associated with a ninth node (203C); and
- a third pair of transistors (204C, 205C) which have opposite polarities, the source of each of the transistors (204C, 205C) being associated with the ninth node (203C), the drain of each of the eighth and ninth nodes (204C, 205C) being associated with the input for first bits (Aᵢ) of the operand (A), the gate of one (204C) of the transistors being associated with one of the eighth and ninth nodes (403C) and the gate of the other transistor (205C) being associated with the upper carry-over input (Rᵢ₋₁S), and the result signal (Si) representative of the EXCLUSIVE OR of the bits of the operand (A) with the upper carry-over is obtained from the ninth node (203C).

9. Binary calculation device according to Claim 5, characterised in that the second module (5C) of each cell associated with a bit (Bᵢ) of the logic value "1" of the fixed operand (B) comprises:
- a first pair of transistors (301C, 302C) which have opposite polarities, the gate of one (301C) of the transistors being associated with the upper carry-over signal (Rᵢ₋₁S) and the gate of the other (302C) being associated with the complement of the upper carry-over signal (Rᵢ₋₁S), the drain of each of the transistors (301C, 302C) being associated with the bit (Aᵢ) of the operand (A), the source of each of the transistors (301C, 302C) being associated with a tenth node (303C); and
- a P-channel transistor (304C), of which the source is associated with a positive electrical voltage (V), of which the gate is controlled by the complement of the upper carry-over signal (Rᵢ₁S) and of which the drain is associated with the tenth node (303C) associating the source of each of the transistors (301C, 302C) with the drain of the transistors (304C).

10. Binary calculation device of the type comprising a plurality of cells according to Claims 5 to 9, in which the lower carry-over (RᵢS) of the cell of rank (i) (0<i<n-2) is associated with the upper carry-over input (RᵢS) of the cell of rank (i+1), the said device being characterised in that each cell is wired according to the values of the bit (Bᵢ) of the operand (B).

11. Binary parallel-serial multiplier for multiplication of a fixed operand (B) of n bits (Bₙ₋₁, Bₙ₋₂,..., Bₒ) by an operand (D) of n bits (Dₙ₋₁, Dₙ₋₂,..., Dₒ) which may have any value, the said multiplier comprising an accumulation and shift register (16) for storing a partial result of the multiplication, the said register comprising an input and an output, and the said multiplier being characterised in that it comprises additionally a binary calculation device (12) according to any one of Claims 5 to 9, and has an input associated with the output of the register (16) and an output, the cell of the said binary calculation device (12) comprising a first module for delivering a signal representing the EXCLUSIVE OR of the signal of the operand D with the upper carry-over signal and a second module for producing a lower carry-over signal (RᵢS) and a multiplexer (14) which has two inputs associated respectively with the output of the binary calculation device (12) and with the output of the register (16), and an output associated with the input of the register, the said multiplexer also comprising a control input (18) to which the non-fixed operand (D) is applied in serial form.

12. Multiplier according to Claim 11, for permitting multiplication of two operands (B) and (D) which are of opposite sign, characterised in that the multiplier additionally comprises:
- a second multiplexer (20) disposed between the output of the accumulation and shift register (16) and the input of the adder (12), the said second multiplexer comprising two inputs associated respectively with the output of the register and with the output of an inverter (22) the input of which is associated with the output of the register, the said second multiplexer (20) being controlled by the highest order bit (Dₙ₋₁) of the operand (D).

## Patentansprüche

1. Binäre Rechenvorrichtung der mindestens eine Zelle umfassenden Art mit
einem Eingang für eine erste binäre Ziffer oder ein erstes Bit (Aᵢ),
einem Eingang für ein zweites Bit (Bᵢ),
einem Eingang für ein eingehendes Übertragsbit (Rᵢ₋₁S),
**gekennzeichnet durch**
erste Mittel (100A, 109A) zum Erzeugen eines ersten Signals und seines Komplements, wobei das erste Signal für ein EXKLUSIVES ODER zwischen einem der ersten und der zweiten Eingangsbits und dem eingehenden Übertragsbit representativ ist und wobei das Komplement des ersten durch Inversion des ersten Signals erzeugt wird,
zweite Mittel (200A) zum Erzeugen eines Ergebnissignals (Sᵢ) der Zelle durch eine EXKLUSIVES ODER-Funktion des anderen der ersten und zweiten Eingangsbits (Bᵢ) mit dem ersten Signal und
dritte Mittel (300A) zum Erzeugen eines ausgehenden Übertragssignals (RᵢS) durch eine Übertragungsfunktion umfassend zwei Übertragungsanschlüsse, die durch das erste Signal und sein Komplement gesteuert werden, wobei einer der Anschlüsse den Durchlauf eines (Aᵢ) der Signale der ersten und zweiten Eingangsbits und der andere Anschluß den Durchgang des anderen (Bᵢ) der Signale der ersten und zweiten Eingangsbits ermöglicht.

2. Vorrichtung nach Anspruch 1, **dadurch gekennzeichnet,** daß die ersten Mittel (100A) umfassen:
ein erstes Paar von Transistoren (101, 102A) entgegengesetzter Polarität, wobei die Steuerelektrode jedes Transistors (101A, 102A) mit dem Eingang für das erste Bit (Aᵢ) verbunden ist, eine positive elektrische Spannung an der Drainelektrode eines (101A) der Transistoren liegt, Masse an der Sourceelektrode des anderen Transistors (102A) anliegt und die Sourceelektrode des einen (101A) der Transistoren und die Drainelektrode des anderen Transistors (102A) mit einem ersten Knotenpunkt (103A) verbunden sind; und
ein zweites Paar von Transistoren (104A, 105A) entgegengesetzter Polarität, wobei die Drainelekrode eines (104A) der Transistoren mit dem Eingang für das erste Bit (Aᵢ) und die Sourceelektrode des anderen Transistors (105A) mit dem ersten Knotenpunkt (103A) verbunden sind, die Steuerelektrode jedes der Transistoren (104A, 105A) mit dem Eingang für das eingehende Übertragsbit (Rᵢ₋₁S) verbunden ist und die Sourceelektrode des einen (104) der Transistoren sowie die Drainelektrode des anderen Transistors (105A) mit einem zweiten Knotenpunkt (106A) verbunden sind; und
ein drittes Paar von Transistoren (107A, 108A) entgegengesetzter Polarität, wobei die Sourceelektrode jedes der Transistoren (107A, 108A) mit dem zweiten Knotenpunkt (106A) verbunden ist, die Drainelektrode jedes der beiden Transistoren (107A, 108A) mit dem Eingang für das eingehende Übertragsbit (Rᵢ₋₁S) verbunden ist, die Steuerelektrode des einen (107A) der Transistoren mit dem Eingang für das erste Bit (Aᵢ) und die Steuerelektrode des anderen Transistors (108A) mit dem ersten Knotenpunkt (103A) verbunden ist, wobei das erste Signal am zweiten Knotenpunkt (106A) erhalten wird.

3. Vorrichtung nach Anspruch 1, **dadurch gekennzeichnet,** daß die zweiten Mittel (200A) umfassen:
ein erstes Paar von Transistoren entgegengesetzter Polarität, wobei die Steuerelektrode jedes der Transistoren (201A, 202A) mit dem Eingang für das zweite Bit (Bᵢ) verbunden ist, die Drainelektrode des einen (201A) der Transistoren mit dem ersten Signal verbunden ist, die Sourceelektrode des anderen Transistors (202A) mit dem Komplement des erstes Signals verbunden ist und das Ergebnissignal an einem dritten Knotenpunkt (203A) erhalten wird, welcher die Sourceelektrode des einen (201A) der Transistoren mit der Drainelektrode des anderen Transistors (202A) verbindet; und
ein zweites Paar von Transistoren entgegengesetzter Polarität, wobei die Drainelektrode jedes der Transistoren (204A, 205A) mit dem Eingang für das zweite Bit (Bᵢ) verbunden ist, die Steuerelektrode dessen einen (204A) der Transistoren mit dem ersten Signal verbunden ist und die Steuerelekrode des anderen der Transistoren mit dem Komplement des ersten Signals verbunden ist, wobei das Ergebnissignal an dem dritten Knotenpunkt (203A) erhalten wird, welcher mit der Sourceelektrode jedes der Transistoren (204A, 205A) verbunden ist.

4. Vorrichtung nach Anspruch 1, **dadurch gekennzeichnet,** daß die dritten Mittel (300A) umfassen:
ein erstes Paar von Transistoren entgegengesetzter Polarität, wobei die Steuerelektrode des einen (301A) der Transistoren mit dem ersten Signal und die Steuerelektrode des anderen Transistors (302A) mit dem Komplement des ersten Signals verbunden ist, wobei die Drainelektrode jedes der Transistoren (301A, 302A) mit dem Eingang für das zweite Bit (Bᵢ) verbunden ist und wobei das abzugebender Übertragssignal (Rᵢ) an einem vierten Knotenpunkt (303) erhalten wird, welcher mit der Sourceelektrode jedes der Transistoren (301A, 302A) in Verbindung steht;
ein zweites Paar von Transistoren entgegengesetzter Polarität, wobei die Steuerelektrode eines (304A) der Transistoren mit dem ersten Signal und die Steuerelektrode des anderen Transistors (305A) mit dem Komplement des ersten Signals verbunden ist, die Sourceelektrode jedes der Transistoren (304A, 305A) mit dem Eingang für die ersten Bits (Aᵢ) verbunden ist und das abzugebende Übertragssignal (Rᵢ) am vierten Knotenpunkt (303A) erhalten wird, welcher mit der Drainelektrode jedes der Transistoren (304A, 305A) in Verbindung steht;

5. Binäre Rechenvorrichtung der Art umfassend mindestens eine Basiszelle zum Addieren eines ersten Operanden A von n Bits Aₙ₋₁, ..., Aₒ eines beliebigen binären Wertes zu einem zweiten Operanden B von n Bits Bₙ₋₁, ..., Bₒ eines festen und bekannten binären Wertes, wobei die genannte Vorrichtung n Basiszellen umfaßt und jede Basiszelle Eingangsmittel für ein erstes Eingangsbit (Aᵢ), ein zweites Eingangsbit (Bᵢ) sowie ein eingehendes Übertragsbit (Rᵢ₋₁S) und ferner Ausgangsmittel für ein Ergebnisbit (Sᵢ) und ein ausgehendes Übertragsbit (RᵢS) umfaßt;
wobei der Ausgang für den ausgehenden Übertrag der Basiszelle des Rangs j <0 < j < n-2) mit dem Eingang für den eingehenden Übertrag der Basiszelle des Ranges j + 1 verbunden ist, und
wobei die Vorrichtung **dadurch gekennzeichnet** ist,
daß die Strukturen jeder Additionszelle durch den speziellen Wert des Bits (Bᵢ) des festen Operanten (B) bestimmt ist, und
daß jede Zelle umfaßt:
Invertiermittel (401B, 402B, 401C, 402C) zum Erzeugen eines Komplementärsignals des eingehenden Übertrags (Rᵢ₋₁S);
einen ersten Modul (3B, 3C) zum Erzeugen eines Ergebnisignals (Sᵢ) der Zelle, wobei das Ergebnissignal (Sᵢ) representativ ist für eine EXKLUSIVES ODER-Function des ersten Eingangsbits (Aᵢ) beliebigen Wertes mit dem eingehenden Übertrag (Rᵢ₋₁S) und seinem Komplement (Rᵢ₋₁S/); und
einen zweiten Modul (5B, 5C) zum Erzeugen eines ausgehenden Übertragssignals (RᵢS) durch eine Übertragungsfunktion umfassend zwei Übertragungsanschlüsse, die durch das eingehende Übertragssignal (Rᵢ₋₁S) und sein Komplement (Rᵢ₋₁S/) gesteuert werden, wobei eine der Anschlüsse den Durchgang des einen (Aᵢ) der beiden Signale der ersten und zweiten Eingangsbits und der andere der Anschlüsse den Durchgang des anderen (Bᵢ) der beiden Signale der ersten und zweiten Eingangsbits erlaubt.

6. Binäre Rechenvorrichtung nach Anspruch 5, **dadurch gekennzeichnet,** daß der erste Modul (3B) jede Zelle, die mit einem Bit (Bᵢ) des logischen Wertes "0" des festen Operanden (B) verbunden ist, umfaßt:
ein erstes Paar von Transistoren (401B, 402B) entgegengesetzter Polarität, wobei die Steuerelektrode jedes der Transistoren (401B, 402B) mit dem Eingang für den eingehenden Übertrag (Rᵢ₋₁S) verbunden ist, eine positive elektrische Spannung (V) an der Draine des einen (401B) der Transistoren anliegt, die Masse an der Sourceelektrode des anderen Transistors (402B) anliegt und die Sourceelektrode des einen (401B) der Transistoren und die Drainelektrode des anderen Transistors (402B) mit einem fünften Knotenpunkt (403B) verbunden sind;
ein zweites Paar von Transistoren (201B, 202B) entgegengesetzer Polarität, wobei die Drainelekrode des einen (202B) der Transistoren mit dem Eingang für einen eingehenden Übertrag (Rᵢ₋₁S) und die Sourceelektrode des anderen Transistors (202B) mit dem fünften Knotenpunkt (403B) verbunden ist, wobei die Steuerelektrode jedes Transistors (201B, [B2B) mit dem Eingang für ein erstes Bit (Aᵢ) des Operanden (A) verbunden ist und wobei die Sourceelektrode des einen (201B) der Transistoren und die Drainelektrode des anderen Transistors (202B) mit einem sechsten Knotenpunkt (203B) verbunden sind; und
ein drittes Paar von Transistoren (204B, 205B) entgegengesetzter Polarität, wobei die Sourceelektrode jedes der Transistoren (204B, 205B) mit dem sechsten Knotenpunkt (203B) verbunden ist, die Drainelekrode jedes Transistors (204B, 205B) mit dem Eingang für das erste Bit (Aᵢ) des Operanden (A) verbunden ist, die Steuerelektrode des einen (204B) der Transistoren mit dem Eingang für einen eingehenden Übertrag (Rᵢ₋₁S) und die Steuerelekrode des anderen (205B) der Transistoren mit einem der fünften und sechsten Knotenpunkte (403B) verbunden sind, und wobei das Ergebnisresultat, das representativ für ein EXKLUSIVES ODER der Bits des Operanden A mit dem eingehenden Übertrag ist, am sechsten Knotenpunkt (203B) erhalten wird.

7. Binäre Rechenvorrichtung nach Anspruch 5, **dadurch gekennzeichnet,** daß der zweite Modul (5B) jede Zelle, die mit einem Bit (Bᵢ) des logischen Wertes "0" des festen Operanden (B) verbunden ist, umfaßt:
ein erstes Paar von Transistoren (301B, 302B) entgegengesetzter Polarität, wobei die Steuerelektrode des einen (301B) der Transistoren mit dem Signal des eingehenden Übertrags (Rᵢ₋₁S) verbunden ist, die Steuerelektrode des anderen Transistors (302B) mit dem Komplement des Signals des eingehenden Übertrags (Rᵢ₋₁S) verbunden ist, die Drainelektrode jedes Transistors (301B, 302B) mit dem Bit (Aᵢ) des Operanden (A) verbunden ist, die Sourceelektrode jedes der Transistoren (301B, 302B) mit einem siebten Knotenpunkt (303B) verbunden ist; und
einen N-Kanal-Transistor (305B) dessen Sourceelektrode auf Masse liegt, dessen Steuerelektrode durch das Komplement des Signals des eingehenden Übertrags (Rᵢ₋₁S) gesteuert wird und dessen Drainelektrode mit dem siebten Knotenpunkt (303B) verbunden ist, wobei das ausgehende Übertragssignal (RᵢS) am siebten Knotenpunkt (303B) erhalten wird, welcher die Sourceelektrode jedes der Transistoren (301B, 302B) mit der Drainelektrode des Transistors (305B) verbindet.

8. Binäre Rechenvorrichtung nach Anspruch 5, **dadurch gekennzeichnet,** daß der erste Modul (3C) jeder Zelle, die mit einem Bit (Bᵢ) des logischen Wertes "1" des festen Operanden (B) verbunden ist, umfaßt:
ein erstes Paar von Transistoren (401C, 402C) entgegengesetzter Polarität, wobei die Steuerelektrode jedes der Transistoren (401C, 402C) mit dem Eingang für einen eingehenden Übertrag (Rᵢ₋₁S) verbunden ist, eine positive elektronische Spannung (V) an der Drainelektrode des einen (401C) der Transistoren anliegt, die Masse an der Sourceelekrode des anderen Transistors (402C) anliegt und die Sourceelekrode des einen (401C) der Transistoren und die Drainelektrode des anderen (402C) der Transistoren mit einem achten Knotenpunkt (403C) verbunden sind,
ein zweites Paar von Transistoren (201C, 202C) entgegengesetzter Polarität, wobei die Drainelektrode des einen (201C) der Transistoren mit dem achten Knotenpunkt (403C) und die Sourceelektrode des anderen Transistors (202C) mit dem Eingang für den eingehenden Übertrag (Rᵢ₋₁S) verbunden ist, wobei die Steuerelektrode jedes der Transistoren (201C, 202C) mit dem Eingang für erste Bits (Aᵢ) des Operanden (A) verbunden ist, und wobei die Sourceelektrode des einen (201C) der Transistoren und die Drainelektrode des anderen (202C) der Transistoren mit einem neunten Knotenpunkt (203C) verbunden ist; und
ein drittes Paar von Transistoren (204C, 205C) entgegengesetzter Polarität, wobei die Sourcelektrode jedes der Transistoren (204C, 205C) mit dem neunten Knotenpunkt (203C) verbunden sind, die Drainelektrode jedes der Transistoren (204C, 205C) mit dem Eingang für erste Bits (Aᵢ) des Operanten (A) verbunden ist, die Steuerelektrode des einen (204C) der Transistoren mit einem der achten und neunten Knotenpunkt (403C) verbunden ist und die Steuerelektrode des anderen (205C) der Transistoren mit dem Eingang für den eingehenden Übertrag (Rᵢ₋₁S) verbunden ist, und wobei das Ergebnissignal (Sᵢ) das für ein EXKLUSIVES ODER zwischen den Bits des Operanden (A) und dem eingehenden Übertrag representativ ist, am neunten Knotenpunkt (203C) erhalten wird.

9. Binäre Rechenvorrichtung nach Anspruch 5, **dadurch gekennzeichnet,** daß der zweite Modul (5C) jeder Zelle, die mit einem Bit (Bᵢ) des logischen Wertes "1" des festen Operanden (B) verbunden ist, umfaßt:
ein erstes Paar von Transistoren (310C, 302C) entgegengesetzter Polarität, wobei die Steuerelektrode des einen (301C) der Transistoren mit dem eingehenden Übertragssignal (Rᵢ₋₁S) und die Steuerelektrode des anderen (302C) mit dem Komplement des eingehenden Übertragssignals (Rᵢ₋₁S) verbunden ist, wobei die Drainelektrode jedes Transistors (301C, 302C) mit dem Bit (Aᵢ) des Operanden (A) verbunden ist und wobei die Sourceelektrode jedes der Transistoren (301C, 302C) mit einem zehnten Knotenpunkt (303C) verbunden ist; und
einen P-Kanal-Transistor (304C), dessen Sourceelektrode mit einer positiven elektrischen Spannung (V) verbunden ist, dessen Steuerelektrode durch das Komplement des Signals des eingehenden Übertrags (Rᵢ₋₁S) gesteuert wird und dessen Drainelektrode mit dem zehnten Knotenpunkt (303C) verbunden ist, welcher die Sourceelektrode jedes der Transistoren (301C, 302C) mit der Drainelektrode des Transistors (304C) verbindet.

10. Binäre Rechenvorrichtung, umfassend mehrere Zellen gemäß den Ansprüchen 5 bis 9, in denen der ausgehende Übertrag (RᵢS) der Zelle des Rangs (i) (0<i<n-2) mit dem Eingang des eingehenden Übertrags (RᵢS) der Zelle des Rangs (i+1) verbunden ist) wobei die Vorrichtung **dadurch gekennzeichnet** ist, daß jede Zelle gemäß den Werten des Bits (Bᵢ) des Operanden (B) verdrahtet ist.

11. Parallel-serielle binäre Multiplikatoreinrichtung zum Multiplizieren eines festen Operanden (B) von n Bit (Bₙ₋₁, Bₙ₋₂, ... B₀) mit einem Operanden (D) von n Bit (Dₙ₋₁, Dₙ₋₂, ..., D₀) eines beliebigen Wertes, wobei die Multiplikatoreinrichtung ein Akkumulatorregister und ein Schieberegister (16) zum Speichern eines Zwischenresultates der Multiplication umfaßt und wobei das Register einen Eingang und einen Ausgang hat, **dadurch gekennzeichnet,** daß die Multiplikatoreinrichtung ferner eine binäre Rechenvorrichtung (12) nach einem der Ansprüche 5 bis 9, einen mit dem Ausgang des Registers (16) verbundenen Eingang und einen Ausgang umfaßt, wobei die Zelle der binären Rechenvorrichtung (12) einen ersten Modul zur Abgabe eines einem EXKLUSIVEN ODER zwischen dem Signal des Operanden (D) und dem eingehenden Übertragssignal entsprechenden Signales und einen zweiten Modul zum Erzeugen eines ausgehenden Übertragssignales (RᵢS) umfaßt, daß die Multiplikatoreinrichtung ferner einen Multiplexer (14) mit zwei Eingängen und einem Ausgang umfaßt, wobei die beiden Eingänge mit dem Ausgang der binären Rechenvorrichtung bzw. dem Ausgang des Registers (16) und der Ausgang mit dem Eingang des Registers verbunden sind, und wobei der Multiplexer ferner einen Steuereingang (18) hat, dem der variable Operant (D) in serieller Form zugeführt wird.

12. Multiplikatoreinrichtung nach Anspruch 11 zur Multiplikation von zwei Operanden (B) und (D) entgegengesetzten Vorzeichens, **dadurch gekennzeichnet,** daß die Multiplikatoreinrichtung ferner umfaßt:
einen zweiten Multiplexer (20), der zwischen dem Ausgang des Akkumulatorregisters und des Schieberegisters (16) sowie dem Eingang der Addiervorrichtung (12) angeordnet ist, wobei der zweite Multiplexer zwei Eingänge hat, die mit dem Ausgang des Registers bzw. dem Ausgang eines Inverters (12) verbunden sind, dessen Eingang mit einem Ausgang des Registers verbunden ist, wobei der zweite Multiplexer durch das Bit (Dₙ₋₁) des Operanden (D) mit dem höchsten Gewicht gesteuert wird.
